# EUROPEAN PATENT SPECIFICATION

(11) **EP 3 459 803 B1**
(45) Date of publication and mention of the grant of the patent: **29.06.2022**
(21) Application number: 18196618.5
(22) Date of filing: 25.09.2018
(51) Int. Cl.: B60T 8/40

(54) **ELECTRIC BRAKE SYSTEM AND OPERATING AND DIAGNOSING METHODS THEROF**
ELEKTRISCHES BREMSSYSTEM UND BETRIEBS- UND DIAGNOSEVERFAHREN DAFÜR
SYSTÈME DE FREIN ÉLECTRIQUE ET PROCÉDÉS DE FONCTIONNEMENT ET DE DIAGNOSTIC ASSOCIÉS

(30) Priority: 25.09.2017 KR 20170123547
(43) Date of publication of application: 27.03.2019
(73) Proprietor: Mando Corporation, Gyeonggi-do 451-821 (KR)
(72) Inventor: JEONG, Hyojin, 16709 Suwon-si, Gyeonggi-do (KR); CHOI, Seong Ho, 14045 Anyang-si, Gyeonggi-do (KR)
(74) Representative: Pfenning, Meinig & Partner mbB

(56) References cited:
- WO-A1-2016/087506
- US-A1- 2017 158 180

## Description

### BACKGROUND

### 1. Field

Embodiments of the present invention relate to an electric brake system and an operating method thereof, and more particularly, to an electric brake system configured to generate a braking force by using an electrical signal in response to displacement of a brake pedal and an operating method thereof.

### 2. Description of the Related Art

A brake system is essentially mounted on a vehicle for braking, and various types of brake systems have been proposed to improve safety of drivers and passengers.

In conventional brake systems, methods of supplying a hydraulic pressure required for braking to wheel cylinders by using a booster mechanically connected thereto in the case where a driver pushes a brake pedal have been widely used. However, with increasing market demands for realizing various braking functions closely in accordance with operating environments of vehicles, electric brake systems including a hydraulic pressure supply device that receives driver's intention for braking, as an electrical signal, from a pedal displacement sensor configured to detect displacement of a brake pedal and supplies a hydraulic pressure required for braking to wheel cylinders in the case where the driver pushes a brake pedal have been widely used in recent years.

In a normal operation mode of such electric brake systems, an operation of a brake pedal by a driver generates an electrical signal, a hydraulic pressure supply device electrically operates and is controlled based on the electrical signal to generate a hydraulic pressure required for braking, and transmit the generated hydraulic pressure to wheel cylinders. Complicated and various braking actions may be realized by such electric brake systems electrically operating and controlled as described above. However, when a technical malfunction occurs in electric components, a hydraulic pressure required for braking is not stably generated, and thus safety of passengers may be threatened.

Thus, the electric brake system enters an abnormal operation mode when one component malfunctions or is out of control. In this case, a mechanism in which the operation of the brake pedal by the driver is directly connected to wheel cylinders is required. That is, in the abnormal operation mode of the electric brake system, a hydraulic pressure required for braking needs to be immediately generated by a driver's pedal effort applied to the brake pedal and the hydraulic pressure needs to be directly transmitted to wheel cylinders.

Meanwhile, with increasing market demands for eco-friendly vehicles in recent years, hybrid vehicles become more popular. In general, hybrid vehicles refer to vehicles that recover kinetic energy as electric energy during braking of the vehicles, store the electric energy in a battery, and use the stored energy as supplementary energy to drive the vehicles. These hybrid vehicles have drawn consumers' attention in terms of fuel economy.

A hybrid vehicle recovers energy during a braking operation of the vehicle using a generator, or the like to increase an energy recovering rate. Such braking operation is referred to as regenerative braking. However, since regenerative braking may affect distribution of a braking force to a plurality of wheels of the vehicle, oversteering, understeering, or sliding of the vehicle may occur, and thus driving stability of the vehicle may be impaired.

### Related Art

Patent Document: EP 2 520 473 A1 (Honda Motor Co., Ltd.) November 7, 2012

An exemplary electric brake system is described in US 2017/0158180 A1.

### SUMMARY

Therefore, it is an aspect of the present invention to provide an electric brake system effectively implementing braking under various operating situations and an operating method thereof.

It is another aspect of the present invention to provide an electric brake system improving driving stability of a vehicle and an operating method thereof.

It is another aspect of the present invention to provide an electric brake system stably generating a high braking pressure and an operating method thereof.

It is another aspect of the present invention to provide an electric brake system having improved performance and operating reliability and an operating method thereof.

It is another aspect of the present invention to provide an electric brake system having improved durability by reducing loads applied to components and an operating method thereof.

It is another aspect of the present invention to provide an electric brake system including a reduced size and a reduced number of components and an operating method thereof.

Additional aspects of the invention will be set forth in part in the description which follows and, in part, will be obvious from the description, or may be learned by practice of the disclosure.

According to an aspect of the invention, an electric brake system includes: a hydraulic pressure supply device configured to generate a hydraulic pressure by operating a hydraulic piston by an electrical signal output in response to displacement of a brake pedal and including a first pressure chamber formed at one side of the hydraulic piston movably accommodated in a cylinder block and a second pressure chamber formed at the other side of the hydraulic piston; and a hydraulic control unit including a first hydraulic circuit configured to control a hydraulic pressure transmitted to two wheel cylinders and a second hydraulic circuit configured to control a hydraulic pressure transmitted to the other two wheel cylinders, wherein the hydraulic control unit includes a first hydraulic flow path communicating with the first pressure chamber, second and third hydraulic flow paths branched out from the first hydraulic flow path and respectively connected to the first and second hydraulic circuits, a fourth hydraulic flow path communicating with the second pressure chamber, fifth and sixth hydraulic flow paths branched out from the fourth hydraulic flow path and respectively connected to the first and second hydraulic circuits, and a seventh hydraulic flow path connecting the second hydraulic flow path with the third hydraulic flow path.

The hydraulic control unit includes a first valve provided at the second hydraulic flow path between a point connected to the seventh hydraulic flow path and the first hydraulic circuit to control a flow of a pressurized medium, a second valve provided at the third hydraulic flow path between a point branched out into the second hydraulic flow path and a point connected to the seventh hydraulic flow path to control a flow of the pressurized medium, a third valve provided at the fifth hydraulic flow path to control a flow of the pressurized medium, a fourth valve provided at the sixth hydraulic flow path to control a flow of the pressurized medium, and a fifth valve provided at the seventh hydraulic flow path to control a flow of the pressurized medium.

The first, third and fifth valves may be provided as solenoid valves configured to control bidirectional flows of the pressurized medium, the second valve may be provided as a check valve allowing only a flow of the pressurized medium in a direction from the first pressure chamber to the second hydraulic circuit, and the fourth valve may be provided as a check valve allowing only a flow of the pressurized medium only in a direction from the second pressure chamber to the second hydraulic circuit.

The electric brake system may further include: a reservoir to store the pressurized medium; a master cylinder including a master chamber and a master piston provided to be displaced by the operation of the brake pedal and configured to pressurize and discharge the pressurized medium stored in the master chamber according to displacement; a simulation device including a simulation chamber and a simulation piston provided to be displaced by the pressurized medium discharged from the master chamber and configured to pressurize and discharge the pressurized medium stored in the simulation chamber according to displacement; and a reservoir flow path connecting the master chamber, the simulation chamber, and the reservoir.

The electric brake system may further include: a simulator check valve provided at the reservoir flow path and allowing only a flow of the pressurized medium from the reservoir to the master chamber and the simulation chamber; and a simulator valve provided at a bypass flow path connected in parallel to the simulator check valve in the reservoir flow path to control bidirectional flows of the pressurized medium.

The master piston may include a first master piston directly pressurized by the brake pedal and a second master piston indirectly pressurized by the first master piston, the master chamber may include a first master chamber to accommodate the first master piston and a second master chamber to accommodate the second master piston, the simulation piston may be provided to be displaced by the pressurized medium pressurized and discharged from the first master chamber, and the reservoir flow path may connect the first master chamber, the simulation chamber, and the reservoir.

The simulation device may further include a reaction force spring elastically supporting the simulation piston.

The electric brake system may further include: a first dump flow path connecting the first pressure chamber with the reservoir; a second dump flow path connecting the second pressure chamber with the reservoir; a first dump valve provided at the first dump flow path as a check valve to control the flow of the pressurized medium allowing only a flow of the pressurized medium in a direction from the reservoir to the first pressure chamber; a second dump valve provided at the second dump flow path as a check valve to control the flow of the pressurized medium allowing only a flow of the pressurized medium in a direction from the reservoir to the second pressure chamber; and a third dump valve provided at a bypass flow path connected in parallel to the second dump valve in the second dump flow path as a solenoid valve to control the flow of the pressurized medium allowing bidirectional flows of the pressurized medium between the reservoir and the second pressure chamber.

The electric brake system may further include: a first backup flow path connecting the first master chamber with the first hydraulic circuit; a second backup flow path connecting the second master chamber with the second hydraulic circuit; a first cut valve provided at the first backup flow path to control the flow of the pressurized medium; and a second cut valve provided at the second backup flow path to control the flow of the pressurized medium.

According to another aspect of an embodiment, a method of operating the electric brake system is provided, wherein a normal operation mode is performed by sequentially performing a low-pressure mode in which a relatively low hydraulic pressure is supplied and a high-pressure mode in which a relatively high hydraulic pressure is supplied in accordance with a level of the hydraulic pressure transmitted from the hydraulic pressure supply device to the wheel cylinders.

The low-pressure mode may be performed by opening the first valve and supplying a hydraulic pressure generated in the first pressure chamber by forward movement of the hydraulic piston to the first and second hydraulic circuits.

The high-pressure mode may be performed by opening the first valve and supplying a part of a hydraulic pressure generated in the first pressure chamber by forward movement of the hydraulic piston after the low-pressure mode to the first and second hydraulic circuits, and by opening the third valve and supplying another part of the hydraulic pressure generated in the first pressure chamber to the second pressure chamber.

The low-pressure mode may be released by opening the first and fifth valves and recovering the pressurized medium from the first and second hydraulic circuits to the first pressure chamber by generating a negative pressure in the first pressure chamber by backward movement of the hydraulic piston.

The high-pressure mode may be released by opening the first and fifth valves and recovering the pressurized medium from the first and second hydraulic circuits to the first pressure chamber by generating a negative pressure in the first pressure chamber by backward movement of the hydraulic piston, and by opening the third valve and supplying the pressurized medium to the first pressure chamber from the second pressure chamber.

According to another aspect of an embodiment, a method of operating the electric brake system is provided, wherein an abnormal operation mode is performed by opening the first cut valve to allow the first master chamber and the first hydraulic circuit to communicate with each other, and opening the second cut valve to allow the second master chamber and the second hydraulic circuit to communicate with each other.

According to another aspect of an embodiment, a method of operating the electric brake system is provided, wherein a normal mode is performed by opening the simulator valve, displacing the pressurized medium discharged from the first master chamber using the simulation piston, and supplying the pressurized medium stored in the simulation chamber to the reservoir through the reservoir flow path.

According to another aspect of an embodiment, a method of operating the electric brake system is provided, wherein an inspection mode to check whether the master cylinder or the simulator valve leaks is performed by opening the first cut valve while closing the simulator valve and the second cut valve, supplying a hydraulic pressure generated by operating the hydraulic pressure supply device to the first master chamber, and comparing a hydraulic pressure of the pressurized medium predicted based on a degree of displacement of the hydraulic piston with a hydraulic pressure of the pressurized medium supplied into the first master chamber.

### BRIEF DESCRIPTION OF THE DRAWINGS

These and/or other aspects of the invention will become apparent and more readily appreciated from the following description of the embodiments, taken in conjunction with the accompanying drawings of which:
FIG. 1 is a hydraulic circuit diagram illustrating an electric brake system according to an embodiment of the present invention;
FIG. 2 is an enlarged view illustrating connection relationship between a reservoir and a hydraulic circuit according to the present embodiment;
FIG. 3 is a hydraulic circuit diagram illustrating a situation in which a braking pressure is supplied in a low-pressure mode while a hydraulic piston of an electric brake system according to the present embodiment moves forward;
FIG. 4 is a hydraulic circuit diagram illustrating a situation in which a braking force is supplied in a high-pressure mode while the hydraulic piston of the electric brake system according to the present embodiment moves forward;
FIG. 5 is a hydraulic circuit diagram illustrating a situation in which a braking pressure is supplied while the hydraulic piston of the electric brake system according to the present embodiment moves backward;
FIG. 6 is a hydraulic circuit diagram illustrating a situation in which a braking pressure is released in a high-pressure mode while the hydraulic piston of the electric brake system according to the present embodiment moves backward;
FIG. 7 is a hydraulic circuit diagram illustrating a situation in which a braking pressure is released in a low-pressure mode while the hydraulic piston of the electric brake system according to the present embodiment moves backward; and
FIG. 8 is a hydraulic circuit diagram illustrating that the electric brake system according to the present embodiment operates in an inspection mode.

### DETAILED DESCRIPTION

Reference will now be made in detail to the embodiments of the present invention, examples of which are illustrated in the accompanying drawings, wherein like reference numerals refer to like elements throughout. The drawings may be exaggerated, omitted, or schematically illustrated for convenience of description and clarity.

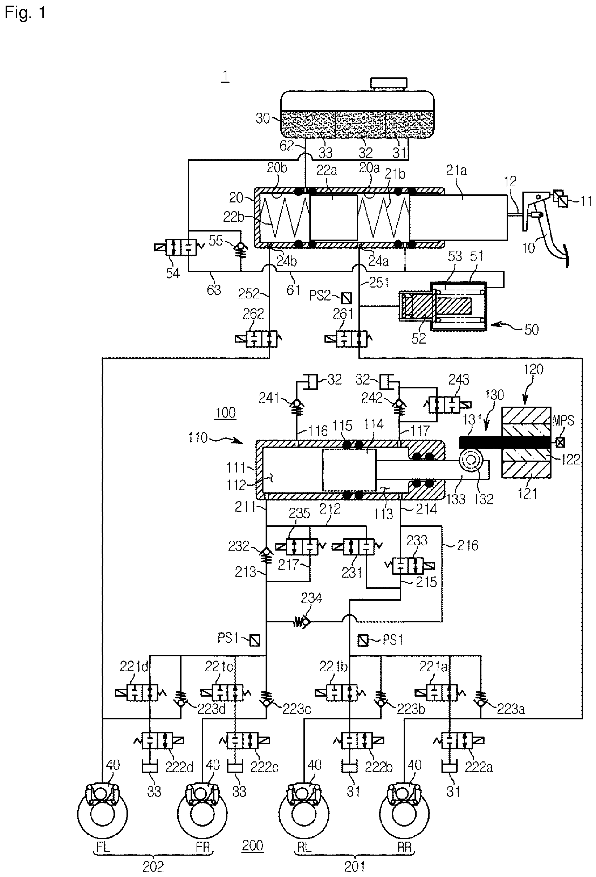

FIG. 1 is a hydraulic circuit diagram illustrating a non-braking state of an electric brake system according to an embodiment of the present disclosure.

Referring to FIG. 1, an electric brake system 1 generally includes a master cylinder 20 configured to generate a hydraulic pressure, a reservoir 30 coupled to an upper portion of the master cylinder 20 and storing a pressurized medium such as a brake oil, an input rod 12 configured to pressurize the master cylinder 20 according to a pedal effort of the brake pedal 10, a wheel cylinder 40 configured to perform braking of each of wheels FL, RR, RL, and FR upon receiving the hydraulic pressure, a pedal displacement sensor 11 configured to detect displacement of the brake pedal 10, and a simulation device 50 configured to provide a reaction force corresponding to the pedal effort of the brake pedal 10.

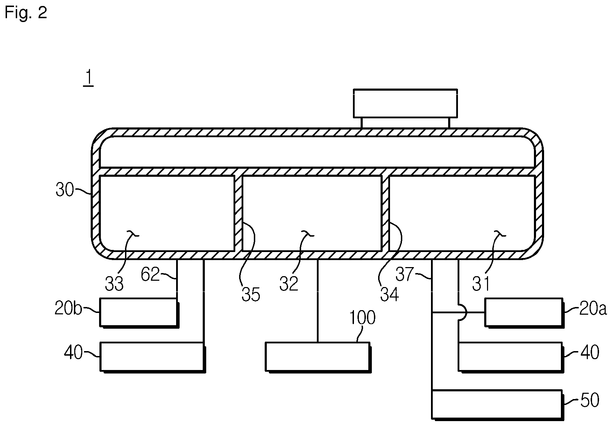

The master cylinder 20 may include at least one chamber and pressurize and discharge the pressurized medium stored therein. FIG. 2 is an enlarged view illustrating main components, e.g., the master cylinder 20, the reservoir 30, and the simulation device 50, according to the present embodiment. Referring to FIGS. 1 and 2, the master cylinder 20 may include a first master chamber 20a, a second master chamber 20b, and a first master piston 21a and a second master piston 22a respectively provided in the master chambers 20a and 20b.

The first master chamber 20a is provided with the first master piston 21a connected to the input rod 12, and the second master chamber 20b is provided with the second master piston 22a. In addition, the pressurized medium may flow into or out of the first master chamber 20a via a first hydraulic port 24a, and the pressurized medium may flow into and out of the second master chamber 20b via a second hydraulic port 24b. For example, the first hydraulic port 24a is connected to a first backup flow path 251, which will be described below, and the second hydraulic port 24b may be connected to a second backup flow path 252, which will be described below. Meanwhile, the first master chamber 20a may be provided with a third hydraulic port 24c connected to a first reservoir flow path 61, which will be described below.

Meanwhile, since the master cylinder 20 according to the present embodiment includes independent two master chambers 20a and 20b, safety may be secured in the event of malfunction of a component. For example, one master chamber 20a of the two master chambers 20a and 20b may be connected to a rear right wheel RL and a rear left wheel RR, and the other master chamber 20b may be connected to a front left wheel FL and a front right wheel FR, and thus the braking of a vehicle may be possible even when one of the master chambers malfunctions.

For example, one of the two master chambers may be connected to the front left wheel FL and the rear right wheel RR, and the other may be connected to the rear left wheel RL and the front right wheel FR. Alternatively, one of the two master chambers may be connected to the front left wheel FL and the front right wheel FR, and the other may be connected to the rear right wheel RR and the real left wheel RL. That is, positions of the wheels connected to the master chambers of the master cylinder 20 are not limited and may be configured in various ways.

A first spring 21b may be provided between the first master piston 21a and the second master piston 22a of the master cylinder 20, and a second spring 22b may be provided between the second master piston 22a and an end of the master cylinder 20. That is, the first master piston 21b may be accommodated in the first master chamber 20a and the second master piston 22a may be accommodated in the second master chamber 20b.

When the driver operates the brake pedal 10, the first master piston 21a and the second master piston 22a moves according to a variance of displacement of the brake pedal 10, thereby compressing the first spring 21b and the second spring 22b. When the pedal effort of the brake pedal 10 is released, the first spring 21b and the second spring 22b expand by an elastic force to return the first and second master pistons 21a and 22a to original positions thereof, respectively.

Meanwhile, the brake pedal 10 may be connected to the first master piston 21a of the master cylinder 20 by the input rod 12. The input rod 12 may directly be connected to the first master piston 21a or may be in close contact therewith with no gap therebetween. Thus, when the driver pushes the brake pedal 10, the master cylinder 20 may directly be pressurized with no lost travel section of the brake pedal 10.

The first master chamber 20a may be connected to the reservoir 30 together with a simulation chamber 51 of the simulation device 50, which will be described below, via the first reservoir flow path 61, and the second master chamber 20b may be connected to the reservoir 30 via the second reservoir flow path 62. The first reservoir flow path 61 may be provided to connect, a rear end of the simulation chamber 51 of the simulation device 50, the first master chamber 20a, and the reservoir 30, and the first reservoir flow path 61 may be provided with a bypass flow path 63, a simulator valve 54, and a check valve 55, which will be described below. This structure will be described in more detail later.

The master cylinder 20 may include two sealing members 25a and 25b disposed on front and rear sides of the first reservoir flow path 61 connected to the first master chamber 20a and two sealing members 25c and 25d disposed on front and rear sides of the second reservoir flow path 62. The sealing members 25a, 25b, 25c, and 25d may be provided in a ring-shaped structure protruding from inner walls of the master cylinder 20 or outer periphery of the first and second pistons 21a and 22a.

The first reservoir flow path 61 may be provided with a check valve 55 that blocks a flow of the pressurized medium into the reservoir 30 from the first master chamber 20a while allowing a flow of the pressurized medium into the first master chamber 20a from the reservoir 30. Front and rear sides of the check valve 55 may be connected by a bypass flow path 63, and an electromagnetic opening/closing valve 54 that electrically controls bidirectional flows of the pressurized medium between the reservoir 30 and the master cylinder 20 may be provided at the bypass flow path 63. The electromagnetic opening/closing valve 54 may be a normal closed type solenoid valve that is normally closed and is opened upon receiving an opening signal from an electronic control unit (ECU). The electromagnetic opening/closing valve 54 may be used to detect operation and leakage of the simulation device 50. This will be described in more detail later.

Meanwhile, the reservoir 30 may include three reservoir chambers 31, 32, and 33 as illustrated in FIG. 2. For example, the three reservoir chambers 31, 32, and 33 may be linearly aligned.

Neighboring reservoir chambers 31, 32, and 33 may be separated from each other by partition walls 34 and 35. For example, the first reservoir chamber 31 and the second reservoir chamber 32 may be separated from each other by a first partition wall 34, and the second reservoir chamber 32 and the third reservoir chamber 33 may be separated from each other by a second partition wall 35.

The first partition wall 34 and the second partition wall 35 may be partially opened to allow the first to third reservoir chambers 31, 32, and 33 to communicate with each other. Thus, pressures of the first to third reservoir chambers 31, 32, and 33 may be equally provided at, for example, atmospheric pressure.

The first reservoir chamber 31 may be connected to the first master chamber 20a of the master cylinder 20, the wheel cylinder 40, and the simulation device 50 as illustrated in FIG. 2. That is, the first reservoir chamber 31 may be connected to the master chamber 20a and the simulation device 50 via the first reservoir flow path 61 and may also be connected to wheel cylinders 40 of a first hydraulic circuit 201 in which two wheel cylinders RL and RR are located among the four wheel cylinders 40.

Although not shown in FIG. 2, connection of the first reservoir chamber 31, the first master chamber 20a, and the simulation device 50 may be controlled by the check valve 55 and the electromagnetic opening/closing valve 54 described above. Connection between the wheel cylinders 40 and the first reservoir chamber 31 may be controlled by the first and second outlet valves 222a and 222b (FIG. 1).

The second reservoir chamber 32 may be connected to a hydraulic pressure supply device 100, which will be described below. For example, referring to FIG. 1, the second reservoir chamber 32 may be connected to a first pressure chamber 112 and a second pressure chamber 113 of the hydraulic pressure providing unit 110. More particularly, the second reservoir chamber 32 may be connected to the first pressure chamber 112 through a first dump flow path 116 and connected to the second pressure chamber 113 through a second dump flow path 117.

The third reservoir chamber 33 may be connected to the second master chamber 20b of the master cylinder 20 and the wheel cylinders 40 as illustrated in FIG. 2. That is, the third reservoir chamber 33 may be connected to the second master chamber 20b through the second reservoir flow path 62 and connected to the wheel cylinders 40 of a second hydraulic circuit 202 in which the other two wheel cylinders FL and FR are disposed among the four wheel cylinders 40 (FIG. 1). Connection between the third reservoir chamber 33 and the wheel cylinders 40 may be controlled by third and fourth outlet valves 222c and 222d.

According to the present embodiment, the reservoir 30 may be provided such that the second reservoir chamber 32 connected to the hydraulic pressure supply device 100 is separated from the first and third reservoir chambers 31 and 33 connected to the first and second master chambers 20a and 20b. This is because, when a reservoir chamber supplying the pressurized medium to the hydraulic pressure supply device 100 and a reservoir chamber supplying the pressurized medium to the master chambers 20a and 20b are the same, the pressurized medium may not be properly supplied to the master chambers 20a and 20b in the case where the reservoir 30 cannot properly supply the pressurized medium to the hydraulic pressure supply device 100.

Thus, since the second reservoir chamber 32 of the reservoir 30 is separated from the first and third reservoir chambers 31 and 33 thereof, the pressurized medium may be properly supplied from the reservoir 30 to the first and second master chambers 20a and 20b enabling emergency braking even in an emergency situation where the pressurized medium cannot be properly supplied to the hydraulic pressure supply device 100.

Similarly, the reservoir 30 may be provided such that the second reservoir chamber 31 connected to the first master chamber 20a is separated from the third reservoir chamber 33 connected to the second master chamber 20b. This is because, when a reservoir chamber supplying the pressurized medium to the first master chamber 20a and a reservoir chamber supplying the pressurized medium to the second master chamber 20b are the same, the pressurized medium may not be properly supplied to the second master chamber 20b in the case where the reservoir 30 cannot properly supply the pressurized medium to the first master chamber 20a.

Thus, since the first reservoir chamber 31 and the third reservoir chamber 33 of the reservoir 30 are separated from each other, the reservoir 30 may normally supply the pressurized medium to the second master chamber 20b even in an emergency situation where the pressurized medium cannot be properly supplied to the first master chamber 20a, so that a normal braking pressure may be supplied to at least two wheel cylinders 40 among the four wheel cylinders 40.

In addition, although not shown in detail, the reservoir 30 may be provided such that the first and second dump flow paths 116 and 117 from the hydraulic pressure supply device 100 to the second reservoir 32 is separated from dump lines from the wheel cylinders 40 to the first and second reservoir 31 and 33. Thus, air bubbles that may be generated in a dump line during ABS braking do not flow into the first and second pressure chambers 112 and 113 of the hydraulic pressure supply device 100, thereby preventing deterioration of ABS performance.

Hereinafter, the first to third reservoir chambers 31, 32, and 33 will generically be referred to as the reservoir 30 for descriptive convenience.

The simulation device 50 may be connected to the first backup flow path 251, which will be described below, to receive a hydraulic pressure output from the first master chamber 20a and provide the driver with a reaction force in response to a pedal effort of the brake pedal 10. Since the simulation device 50 supplies the reaction force according to the pedal effort of the driver applied to the brake pedal 10, a pedal feeling is provided to the driver enabling fine operation of the brake pedal 10 by the driver. Thus, the braking force of the vehicle may finely be controlled.

Referring to FIG. 1, the simulation device 50 includes a simulation piston 52 provided to be displaced by the pressurized medium discharged from the first hydraulic port 24a of the master cylinder 20, a simulation chamber 51 storing a pressurized medium which is pressurized and discharged therefrom by displacement of the simulation piston 52, a pedal simulator provided with a reaction force spring 53 elastically supporting the simulation piston 52, and a simulator valve 54 provided at a downstream side of the simulation chamber 51 in the first reservoir flow path 61.

The simulation piston 52 and the reaction force spring 53 may be provided to be displaced within a predetermined range in the simulation chamber 51 by the pressurized medium flowing into the simulation chamber 51 from the first master chamber 20a through the first backup flow path 251, which will be described below, and the simulator valve 54 may be provided at the first reservoir flow path 61 connecting a rear end of the simulation chamber 51 and the reservoir 30 to be connected to the check valve 55 in parallel. Even when the simulation piston 52 returns to an original position thereof, the pressurized medium flows from the reservoir 30 by the check valve 55. Thus, the inside of the simulation chamber 51 is filled with the pressurized medium all the time.

Meanwhile, the reaction force spring 53 shown in the drawing is merely an example that may provide an elastic force to the simulation piston 52 and may have various structure so long as the reaction force spring 53 stores an elastic force. For example, the reaction force spring 53 may be formed of a rubber or various members storing the elastic force with a coil or plate shape.

The check valve 55 may be provided to block the flow of the pressurized medium from the simulation chamber 51 into the reservoir 30 while allowing the flow of the pressurized medium from the reservoir 30 into the first master chamber 20a and the simulation chamber 51. In other words, the check valve 55 may be provided to allow only a flow of the pressurized medium in the direction from the reservoir 30 to the first master chamber 20a and the simulation chamber 51.

The first reservoir flow path 61 may be provided with the bypass flow path 63 connected in parallel to the check valve 55, and the bypass flow path 63 may be provided with the simulator valve 54 to control bidirectional flows of the pressurized medium. Particularly, the bypass flow path 63 may be provided by bypassing the front and rear sides of the check valve check valve 55 in the first reservoir flow path 61, and the simulator valve 54 may be provided as a normal closed type solenoid valve that is normally closed and is opened upon receiving an electrical signal from the ECU, which will be described below.

In a normal operation mode, when the driver applies a pedal effort to the brake pedal 10, the simulator valve 54 is opened to allow the pressurized medium stored in the simulation chamber 51 at a rear side of the simulation piston 52 (right side of the simulation piston 52 in the drawing) to be transmitted to the reservoir 30 through the first reservoir flow path 61. Thus, the pressurized medium stored in the first master chamber 20a is transmitted to a front side of the simulation piston 52 (left side of the simulation piston 52 in the drawing) to compress the reaction force spring 53, thereby providing the driver with a pedal feeling.

Meanwhile, when the first master piston 21a moves forward by the operation of the brake pedal 10 by the driver, the third hydraulic port 24c is blocked and sealed by the first master piston 21a and the two sealing members 25a and 25b, thereby preventing re-introduction of the pressurized medium stored in the rear side of the simulation piston 52 into the first master chamber 20a via the first reservoir flow path 61.

The operation of the simulation device 50 will be described. When the driver operates the brake pedal 10 and the pedal effort is applied, the simulator valve 54 is opened and the first master piston 21a moves to supply the pressurized medium stored in the first master chamber 20a to the front side of the simulation piston 52 in the simulation chamber 51, thereby causing displacement of the simulation piston 52. In this case, the pressurized medium stored in the rear side of the simulation piston 52 in the simulation chamber 51 flows into the reservoir 30 through the first reservoir flow path 61 that is opened by the opening of the simulator valve 54, and the simulation piston 52 compresses the reaction force spring 53 to provide the driver with the reaction force corresponding thereto as a pedal feeling.

When the driver releases the pedal effort applied to the brake pedal 10, the reaction force spring 53 expands by the elastic force to return the simulation piston 52 to the original position thereof, and the pressurized medium stored in the front side of the simulation piston 52 in the simulation chamber 51 is discharged to the first master chamber 20a or the first backup flow path 251. In addition, the pressurized medium is supplied from the reservoir 30 to the rear side of the simulation piston 52 in the simulation chamber 51 through the first reservoir flow path 61, and thus the inside of the simulation chamber 51 is filled with the pressurized medium again.

As described above, since the inside of the simulation chamber 51 is filled with the pressurized medium all the time, friction of the simulation piston 52 is minimized while operating the simulation device 50, thereby improving durability of the simulation device 50 and blocking introduction of foreign matter from the outside.

Meanwhile, the simulator valve 54 may also serve as a valve for inspection operating in an inspection mode of the electric brake system 1 according to the present embodiment. This will be described in more detail later.

The electric brake system 1 according to the present embodiment includes a hydraulic pressure supply device 100 configured to mechanically operate upon receiving a driver's braking intension as an electrical signal from the pedal displacement sensor 11 that detects displacement of the brake pedal 10, a hydraulic control unit 200 including the first and second hydraulic circuits 201 and 202 configured to control a flow of the hydraulic pressure transmitted to the wheel cylinders 40 respectively provided at two wheels RL, FR, FL, and RR, a first cut valve 261 provided at the first backup flow path 251 connecting the first hydraulic port 24a of the master cylinder 20 and the first hydraulic circuit 201 to control the flow of the hydraulic pressure, a second cut valve 262 provided at the second backup flow path 252 connecting the second hydraulic port 24b of the master cylinder 20 and the second hydraulic circuit 202 to control the flow of the hydraulic pressure, and an ECU (not shown) configured to control the hydraulic pressure supply device 100 and valves 54, 221a, 221b, 221c, 221d, 222a, 222b, 222c, 222d, 243, 261, 262, 235, 231, and 233 based on hydraulic pressure information and pedal displacement information.

The hydraulic pressure supply device 100 may include a hydraulic pressure providing unit 110 configured to provide a pressure of the pressurized medium transmitted to the wheel cylinders 40, a motor configured to generate a rotational force by an electrical signal of the pedal displacement sensor 11, and a power conversion unit 130 configured to convert a rotational motion of the motor 120 into a lineal motion and transmit the lineal motion to the hydraulic pressure providing unit 110. In this regard, the hydraulic pressure providing unit 110 may operate not by a driving force received from the motor 120 but by a pressure received from a high-pressure accumulator.

The hydraulic pressure providing unit 110 includes a cylinder block 111 including a pressure chamber in which a received pressurized medium is stored, a hydraulic piston 114 accommodated in the cylinder block 111, a sealing member 115 provided between the hydraulic piston 114 and the cylinder block 111 to seal the pressure chamber, and a drive shaft 133 connected to a rear end of the hydraulic piston 114 and transmitting a power output from the power conversion unit 130 to the hydraulic piston 114.

The pressure chamber includes a first pressure chamber 112 located at a front side of the hydraulic piston 114 (in a forward direction, i.e., left side in the drawing) and a second pressure chamber 113 located at a rear side of the hydraulic piston 114 (in a backward direction, i.e., right side in the drawing).

That is, the first pressure chamber 112 is defined by the cylinder block 111 and a front end of the hydraulic piston 114 with a volume varying in accordance with movement of the hydraulic piston 114 and the second pressure chamber 113 is defined by the cylinder block 111 and a rear end of the hydraulic piston 114 with a volume varying in accordance with movement of the hydraulic piston 114.

The first pressure chamber 112 is connected to a first hydraulic flow path 211 via a first communication hole 111a formed at a rear portion of the cylinder block 111 and the second pressure chamber 113 is connected to a fourth hydraulic flow path 214 via a second communication hole 111b formed at a front portion of the cylinder block 111.

The first hydraulic flow path 211 connects the first pressure chamber 112 with the first and second hydraulic circuits 201 and 202. In addition, the first hydraulic flow path 211 is branched out into a second hydraulic flow path 212 communicating with the first hydraulic circuit 201 and a third hydraulic flow path 213 communicating with the second hydraulic circuit 202. The fourth hydraulic flow path 214 connects the second pressure chamber 113 with the first and second hydraulic circuits 201 and 202. In addition, the fourth hydraulic flow path 214 is branched out into a fifth hydraulic flow path 215 communicating with the first hydraulic circuit 201 and a sixth hydraulic flow path 216 communicating with the second hydraulic circuit 202.

The sealing member includes a piston sealing member 115 located between the hydraulic piston 114 and the cylinder block 111 and sealing a gap between the first pressure chamber 112 and the second pressure chamber 113 and a drive shaft sealing member located between the drive shaft 133 and the cylinder block 111 and sealing a gap between the second pressure chamber 113 and the cylinder block 111. Thus, a hydraulic pressure or a negative pressure of the first pressure chamber 112 generated by forward or backward movement of the hydraulic piston 114 is blocked by the piston sealing member 115 and transmitted to the first and fourth hydraulic flow paths 211 and 214 without leaking into the second pressure chamber 113. Also, a hydraulic pressure or a negative pressure of the second pressure chamber 113 generated by forward or backward movement of the hydraulic piston 114 is blocked by the drive shaft sealing member without leaking into the cylinder block 111.

In addition, the first and second pressure chambers 112 and 113 may be connected to the reservoir 30 respectively via the dump flow paths 116 and 117 to receive the pressurized medium from the reservoir 30 and store the pressurized medium or to transmit the pressurized medium of the first or second pressure chambers 112 and 113 to the reservoir 30. For example, the first pressure chamber 112 may be connected to the first dump flow path 116 via a third communication hole 111c formed at a front portion, and the second pressure chamber 113 may be connected to the second dump flow path 117 via a fourth communication hole 111d formed at a rear portion.

Referring back to FIG. 1, flow paths 211, 212, 213, 214, 215, 216, and 217 and valves 231, 232, 233, 234, 235, 141, 242, and 243 connected to the first pressure chamber 112 and the second pressure chamber 113 will be described.

The first hydraulic flow path 211 communicates with the first pressure chamber 112 and is branched out into the second hydraulic flow path 212 and the third hydraulic flow path 213. The second hydraulic flow path 212 communicates with the first hydraulic circuit 201, and the third hydraulic flow path 213 communicates with the second hydraulic circuit 202. Thus, the hydraulic pressure may be transmitted to the first hydraulic circuit 201 and the second hydraulic circuit 202 by forward movement of the hydraulic piston 114.

The second hydraulic flow path 212 and the third hydraulic flow path 213 are respectively provided with a first valve 231 and a second valve 232 that control the flow of the pressurized medium. The first valve 231 may be provided as a solenoid valve to control bidirectional flows of the pressurized medium transmitted through the second hydraulic flow path 212. The first valve 231 may be provided as a normal closed type solenoid valve that is normally closed and is opened upon receiving an electrical signal from the ECU.

The second valve 232 may be provided as a check valve to control a flow of the pressurized medium through the third hydraulic flow path 213 allowing only a flow of the pressurized medium toward the second hydraulic circuit 202 from the first pressure chamber 112. That is, the second valve 232 may block leakage of the hydraulic pressure of the second hydraulic circuit 202 into the first pressure chamber 112 through the third hydraulic flow path 213 while allowing transmission of the hydraulic pressure generated in the first pressure chamber 112 to the second hydraulic circuit 202.

The fourth hydraulic flow path 214 communicates with the second pressure chamber 113 and is branched out into the fifth hydraulic flow path 215 and the sixth hydraulic flow path 216. The fifth hydraulic flow path 215 joins the second hydraulic flow path 212 to communicate with the first hydraulic circuit 201, and the sixth hydraulic flow path 216 joins the third hydraulic flow path 213 to communicate with the second hydraulic circuit 202. Thus, the hydraulic pressure may be transmitted to the first hydraulic circuit 201 and the second hydraulic circuit 202 by backward movement of the hydraulic piston 114.

The fifth hydraulic flow path 215 and the sixth hydraulic flow path 216 are respectively provided with a third valve 233 and a fourth valve 234 that control the flow of the pressurized medium. The third valve 233 may be provided as a solenoid valve to control bidirectional flows of the pressurized medium transmitted through the fifth hydraulic flow path 215. The third valve 233 may be provided as a normal closed type solenoid valve that is normally closed and is opened upon receiving an electrical signal from the ECU.

The fourth valve 234 may be provided as a check valve to control a flow of the pressurized medium through the sixth hydraulic flow path 216 allowing only a flow of the pressurized medium toward the second hydraulic circuit 202 from the second pressure chamber 113. That is, the fourth valve 234 may block leakage of the hydraulic pressure of the second hydraulic circuit 202 into the second pressure chamber 113 through the sixth hydraulic flow path 216 while allowing transmission of the hydraulic pressure generated in the second pressure chamber 113 to the second hydraulic circuit 202.

A seventh hydraulic flow path 217 connects the second hydraulic flow path 212 with the third hydraulic flow path 213. One end of the seventh hydraulic flow path 217 is connected to the second hydraulic flow path 212 between a point connected to the first hydraulic flow path 211 and a point at which the first valve 231 is located, and the other end of the seventh hydraulic flow path 217 is connected to the third hydraulic flow path 213 between a point where the second valve 232 is located and the second hydraulic circuit 202.

The seventh hydraulic flow path 217 is provided with a fifth valve 235 to control the flow of the pressurized medium. The fifth valve 235 may be provided as a solenoid valve to control bidirectional flows of the pressurized medium transmitted through the seventh hydraulic flow path 217. The fifth valve 235 may be provided as a normal closed type solenoid valve that is normally closed and is opened upon receiving an electrical signal from the ECU.

Meanwhile, in vehicles using a motor as a main or auxiliary drive source, such as electric vehicles and hybrid vehicles, a regenerative braking force is added to a hydraulic braking force uniformly applied to four wheels during braking. Thus, close cooperative control between the two braking forces is required such that a total braking force applied to the four wheels is constant for safe braking.

For example, when the motor is installed at a front wheel, a total braking force of front wheels in which the regenerative braking force generated by the motor is added to the hydraulic braking force is greater than a total braking force of rear wheels including only the hydraulic braking force, and thus braking safety is not impaired.

However, when the motor is installed at a rear wheel, a total braking force of front wheels including only the hydraulic braking force is greater than a total braking force of rear wheels in which the regenerative braking force generated by the motor is added to the hydraulic braking force, and thus braking safety may be impaired in the case where the two braking forces are not appropriately adjusted.

The first, third, and fifth valves 231, 233, and 235 may serve as valves for controlling regenerative braking. To this end, in vehicles generating a rotational driving force of the wheels by the motor, such as hybrid vehicles or electric vehicles, the first, third, and fifth valves 231, 233, and 235 may reduce a hydraulic braking force transmitted from the hydraulic pressure supply device 100 to the hydraulic control unit 200 in accordance with a regenerative braking force generated during deceleration.

In this case, the ECU may judge whether the regenerative braking force is generated in the vehicle. When the regenerative braking force is not generated, the ECU may control the first, third and fifth valves 231, 233, and 235 to generate a uniform braking force in the four wheels by normally operating the hydraulic pressure supply device 100.

Upon determination that regenerative braking force is generated in the rear wheels RR and RL, the ECU calculates a magnitude of a necessary hydraulic braking force according to a difference between a braking force demanded by the driver and a regenerative braking force and controls opening and closing of the first, third and fifth valves 231, 233, and 235 according to the calculated magnitude. Generally, the hydraulic braking force of the rear wheels where the regenerative braking force is generated is less than the hydraulic braking force when the regenerative braking force is not generated.

Meanwhile, the first and second dump flow paths 116 and 117 may be provided with first and second dump valves 241 and 242 to control the flow of the pressurized medium, respectively. Referring back to FIG. 1, the first and second dump valves 241 and 242 may be provided as check valves that allows only the flow of the pressurized medium in a direction from the reservoir 30 to the first and second pressure chambers 112 and 113 and blocks the flow of the pressurized medium in the opposite direction. That is, the first dump valve 241 may block the flow of the pressurized medium from the first pressure chamber 112 to the reservoir 30 while allowing the flow of the pressurized medium from the reservoir 30 to the first pressure chamber 112, and the second dump valve 242 may block the flow of the pressurized medium from the second pressure chamber 113 to the reservoir 30 while allowing the flow of the pressurized medium from the reservoir 30 to the second pressure chamber 113.

In addition, the second dump flow path 117 may be provided with a bypass flow path connected in parallel to the second dump valve 242. Particularly, the bypass flow path may be provided by connecting front and rear sides of the second dump valve 242 on the second dump flow path 117, and a third dump valve 243 to control the flow of the pressurized medium between the second pressure chamber 113 and the reservoir 30 may be provided at the bypass flow path.

The third dump valve 243 may be provided as a two-way valve to control the flow of the pressurized medium between the second pressure chamber 113 and the reservoir 30. The third dump valve 243 may be a normal open type solenoid valve that is normally open and is closed upon receiving an electrical signal from the ECU.

Meanwhile, in the electric brake system 1 according to the present embodiment, the hydraulic pressure providing unit 110 may operate in a doubleacting manner. That is, the hydraulic pressure generated in the first pressure chamber 112 by forward movement of the hydraulic piston 114 may be transmitted to the first hydraulic circuit 201 through the first hydraulic flow path 211 and the second hydraulic flow path 212 to operate the wheel cylinders 40 installed at the rear left wheel RL and the rear right wheel RR and transmitted to the second hydraulic circuit 202 through the first hydraulic flow path 211 and the third hydraulic flow path 213 to operate the wheel cylinders 40 installed at the front left wheel FL and the front right wheel FR.

Similarly, the hydraulic pressure generated in the second pressure chamber 113 by backward movement of the hydraulic piston 114 may be transmitted to the first hydraulic circuit 201 through the fourth hydraulic flow path 214 and the fifth hydraulic flow path 215 to operate the wheel cylinders 40 installed at the rear left wheel RL and the rear right wheel RR and transmitted to the second hydraulic circuit 202 through the fourth hydraulic flow path 214 and the sixth hydraulic flow path 216 to operate the wheel cylinders 40 installed at the front left wheel FL and the front right wheel FR.

In addition, by the negative pressure generated in the first pressure chamber 112 by backward movement of the hydraulic piston 114, the pressurized medium of the wheel cylinders 40 installed at the rear left wheel RL and the rear right wheel RR of the first hydraulic circuit 201 is sucked and transmitted to the first pressure chamber 112 through the second hydraulic flow path 212 and the first hydraulic flow path 211, and the pressurized medium of the wheel cylinders 40 installed at the front left wheel FL and the front right wheel FR of the second hydraulic circuit 202 is sucked and transmitted to the first pressure chamber 112 through the third hydraulic flow path 213 and the first hydraulic flow path 211.

Similarly, by the negative pressure generated in the second pressure chamber 113 by forward movement of the hydraulic piston 114, the pressurized medium of the wheel cylinders 40 of the first hydraulic circuit 201 and the second hydraulic circuit 202 are sucked and transmitted to the second pressure chamber 113 through the hydraulic flow paths 215 and 214.

Next, the motor 120 and the power conversion unit 130 of the hydraulic pressure supply device 100 will be described.

The motor 120 that is a device for generating a rotational force by a signal output from the ECU (not shown) may generate the rotational force in a forward or reverse direction. A rotational angular velocity and a rotational angle of the motor 120 may precisely be controlled. Since such a motor 120 is well known in the art, detailed descriptions thereof will not be given.

The ECU controls the motor 120 and valves 54, 221a, 221b, 221c, 221d, 222a, 222b, 222c, 222d, 243, 261, 262, 235, 231, and 233 of the electric brake system 1 according to the present disclosure which will be described below. The operation of controlling a plurality of valves by displacement of the brake pedal 10 will be described below.

The driving force of the motor 120 causes displacement of the hydraulic piston 114 via the power conversion unit 130, and the hydraulic pressure generated in the pressure chamber by sliding movement of the hydraulic piston 114 is transmitted to the wheel cylinders 40 respectively installed at the wheels RL, FR, FL, and RR through the hydraulic flow paths 211 and 214. The motor 120 may be a brushless motor including a stator 121 and a rotor 122.

The power conversion unit 130 that is an apparatus for converting rotational force into linear motion may include, for example, a worm shaft 131, a worm wheel 132, and a drive shaft 133. The worm shaft 131 may be integrally formed with a rotation shaft of the motor 120 and have a worm formed on the outer peripheral surface and engaged with the worm wheel 132 to rotate the worm wheel 132. The worm wheel 132 is engaged with the drive shaft 133 to linearly move the drive shaft 133, and the drive shaft 133 is connected to the hydraulic piston 114 to slidably move the hydraulic piston 114 in the cylinder block 111.

In other words, a signal generated by displacement of the brake pedal 10 is detected by the pedal displacement sensor 11 and transmitted to the ECU (not shown), and the ECU drives the motor 120 in one direction to rotate the worm shaft 131 in one direction. A rotational force of the worm shaft 131 is transmitted to the drive shaft 133 via the worm wheel 132, and the hydraulic piston 114 connected to the drive shaft 133 moves forward to generate a hydraulic pressure in the first pressure chamber 112.

On the contrary, when the pedal effort is removed from the brake pedal 10, the ECU drives the motor 120 in the opposite direction to rotate the worm shaft 131 in the opposite direction. Thus, the worm wheel 132 also rotates in the opposite direction and the hydraulic piston 114 connected to the drive shaft 133 returns (moves backward) to generate a negative pressure in the first pressure chamber 112.

Meanwhile, the hydraulic pressure and the negative pressure may also be generated in the opposite direction to that described above. That is, a signal detected by the pedal displacement sensor 11 by displacement of the brake pedal 10 is transmitted to the ECU (not shown), and the ECU drives the motor 120 in the opposite direction to rotate the worm shaft 131 in the opposite direction. The rotational force of the worm shaft 131 is transmitted to the drive shaft 133 via the worm wheel 132, and a hydraulic pressure is generated in the second pressure chamber 113 by backward movement of the hydraulic piston 114 connected to the drive shaft 133.

On the contrary, when the pedal effort is removed from the brake pedal 10, the ECU drives the motor 120 in one direction to rotate the worm shaft 131 in one direction. Thus, the worm wheel 132 also rotates in the opposite direction and the hydraulic piston 114 connected to the drive shaft 133 returns (moves forward) to generate a negative pressure in the second pressure chamber 113.

As described above, the hydraulic pressure supply device 100 transmits the hydraulic pressure to the wheel cylinders 40 or sucks the hydraulic pressure and transmits the hydraulic pressure to the reservoir 30 in accordance with the rotation direction of the rotational force generated by the motor 120. For example, when the motor 120 rotates in one direction, a hydraulic pressure may be generated in the first pressure chamber 112 or a negative pressure may be generated in the second pressure chamber 113. Whether to brake by using the hydraulic pressure or to release braking by using the negative pressure may be determined by controlling the valves 54, 221a, 221b, 221c, 221d, 222a, 222b, 222c, 222d, 243, 261, 262, 235, 231, and 233.

Meanwhile, the electric brake system 1 according to the present embodiment may further include the first and second backup flow paths 251 and 252 to supply the pressurized medium discharged from the master cylinder 20 directly to the wheel cylinders 40 during abnormal operation.

The first backup flow path 251 may connect the first hydraulic port 24a with the first hydraulic circuit 201, and the second backup flow path 252 may connect the second hydraulic port 24b with the second hydraulic circuit 202. The first backup flow path 251 may be provided with the first cut valve 261 to control bidirectional flows of the pressurized medium, and the second backup flow path 252 may be provided with the second cut valve 262 to control bidirectional flows of the pressurized medium.

The first and second cut valves 261 and 262 may be normal open type solenoid valves that are normally open and are closed upon receiving a closing signal from the ECU.

Next, the hydraulic control unit 200 according to the present embodiment will be described. The hydraulic control unit 200 may include the first hydraulic circuit 201 and the second hydraulic circuit 202 respectively controling two wheels upon receiving the hydraulic pressure. For example, the first hydraulic circuit 201 may control the rear left wheel RL and the rear right wheel RR, and the second hydraulic circuit 202 may control the front left wheel FL and the front right wheel FR. The wheel cylinder 40 is installed at each of the wheels RL, FR, FL, and RR and the hydraulic pressure is supplied from the hydraulic pressure supply device 100 to perform braking.

The first hydraulic circuit 201 is connected to the first hydraulic flow path 211 and the second hydraulic flow path 212 to receive the hydraulic pressure from the hydraulic pressure supply device 100, and the second hydraulic flow path 212 is branched out into two flow paths connected to the rear left wheel RL and the rear right wheel RR. Similarly, the second hydraulic circuit 202 is connected to the first hydraulic flow path 211 and the third hydraulic flow path 213 to receive the hydraulic pressure from the hydraulic pressure supply device 100, and the third hydraulic flow path 213 is branched out into two flow paths connected to the front left wheel FL and the front right wheel FR. The fifth hydraulic flow path 215 connected to the second hydraulic flow path 212 and the sixth hydraulic flow path 216 connected to the third hydraulic flow path 213 are also branched out and connected to the respective wheel cylinders 40.

The first and second hydraulic circuits 201 and 202 may include a plurality of inlet valves 221 (221a, 221b, 221c, and 221d) to control the flow of the hydraulic pressure. For example, the first hydraulic circuit 201 may be provided with two inlet valves 221a and 221b connected to the first hydraulic flow path 211 and respectively controlling hydraulic pressures transmitted to the two wheel cylinders 40. Also, the second hydraulic circuit 202 may be provided with two inlet valves 221c and 221d connected to the third hydraulic flow path 213 and respectively controlling hydraulic pressures transmitted to the wheel cylinders 40. In this case, the inlet valve 221 may be a normal open type solenoid valve that is disposed at an upstream side of the wheel cylinder 40, normally open, and closed upon receiving a closing signal from the ECU.

In addition, the first and second hydraulic circuits 201 and 202 may include check valves 223a, 223b, 223c, and 223d provided at bypass flow paths connecting front and rear sides of each of the inlet valves 221a, 221b, 221c, and 221d. The check valves 223a, 223b, 223c, and 223d may be provided to block flows of the pressurized medium in directions from the hydraulic pressure providing unit 110 to the wheel cylinders 40 while allowing flows of the pressurized medium only in directions from the wheel cylinders 40 to the hydraulic pressure providing unit 110. The check valves 223a, 223b, 223c, and 223d may quickly remove the braking pressure of the wheel cylinders 40 and allow the hydraulic pressure of the wheel cylinders 40 to be transmitted to the hydraulic pressure providing unit 110 while the inlet valves 221a, 221b, 221c, and 221d do not normally operate.

In addition, the first and second hydraulic circuits 201 and 202 may further include a plurality of outlet valves 222 (222a, 222b, 222c, and 222d) connected to the reservoir 30 to improve performance when braking is released. The outlet valves 222 are respectively connected to the wheel cylinders 40 to control releasing of the hydraulic pressure from each of the wheels FL, RR, RL, and FR. That is, the outlet valve 222 may sense the braking pressure of each other wheels RL, FR, FL, and RR and may be selectively opened when a deceleration braking is required, to control the pressure. The outlet valve 222 may be a normal closed type solenoid valve that is normally closed and is opened upon receiving an opening signal from the ECU.

Meanwhile, the hydraulic control unit 200 may be connected to the backup flow paths 251 and 252. For example, the first hydraulic circuit 201 may be connected to the first backup flow path 251 to receive a hydraulic pressure from the master cylinder 20, and the second hydraulic circuit 202 may be connected to the second backup flow path 252 to receive a hydraulic pressure from the master cylinder 20.

The first backup flow path 251 may join the first hydraulic circuit 201 at downstream sides of the first and second inlet valves 221a and 221b. Similarly, the second backup flow path 252 may join the second hydraulic circuit 202 at downstream sides of the third and fourth inlet valves 221c and 221d. Thus, when the first and second cut valves 261 and 262 are closed, the hydraulic pressure may be supplied from the hydraulic pressure supply device 100 to the wheel cylinders 40 via the first and second hydraulic circuits 201 and 202. When the first and second cut valves 261 and 262 are opened, the hydraulic pressure may quickly be supplied from the master cylinder 20 to the wheel cylinders 40 via the first and second backup flow paths 251 and 252.

Meanwhile, reference numerals "PS1" and "PS2" are hydraulic circuit pressure sensors to sense hydraulic pressures of the first or second hydraulic circuits 201 and 202, and "PS3" is a backup flow path pressure sensor to measure a hydraulic pressure of the master cylinder 20. "MPS" is a motor control sensor to control rotational angle or current of the motor 120.

Hereinafter, an operating method of the electric brake system 1 according to an embodiment of the present disclosure will be described.

Prior to explanation, the hydraulic pressure supply device 100 according to the present embodiment may be used in a low-pressure mode and a high-pressure mode, separately. The low-pressure mode and the high-pressure mode may be shifted by changing the operation of the hydraulic control unit 200. The hydraulic pressure supply device 100 may generate a high hydraulic pressure by using the high-pressure mode without increasing the output power of the motor 120. Thus, a stable braking force may be secured while reducing the price and weight of the brake system.

More particularly, the hydraulic piston 114 generates a hydraulic pressure in the first pressure chamber 112 while moving forward. As the hydraulic piston 114 moves forward in an initial state, i.e., as a stroke of the hydraulic piston 114 increases, an amount of the pressurized medium transmitted to the wheel cylinders 40 from the first pressure chamber 112 increases, thereby increasing a braking pressure. However, since there is an effective stroke of the hydraulic piston 114, there is a maximum pressure obtained by forward movement of the hydraulic piston 114.

A maximum pressure in the low-pressure mode is less than a maximum pressure in the high-pressure mode. However, the high-pressure mode has a smaller pressure increase rate per stroke of the hydraulic piston 114 than that of the low-pressure mode. This is because not all of the pressurized medium output from the first pressure chamber 112 flows into the wheel cylinders 40 but a part thereof flows into the second pressure chamber 113.

Thus, the low-pressure mode having a higher pressure increase rate per stroke may be used in the early stage of braking in which braking response is important, and the high-pressure mode having a higher pressure may be used in the late stage of braking in which a maximum braking force is important.

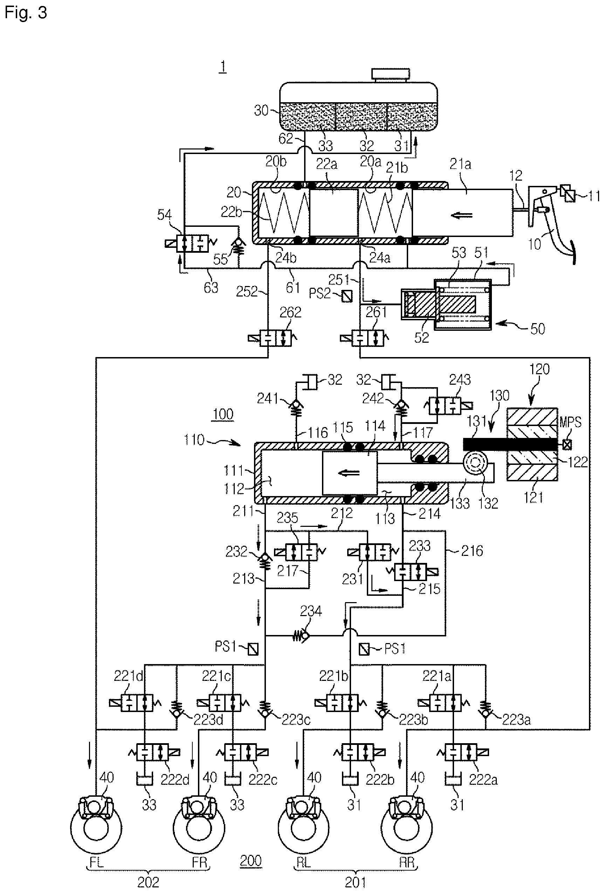

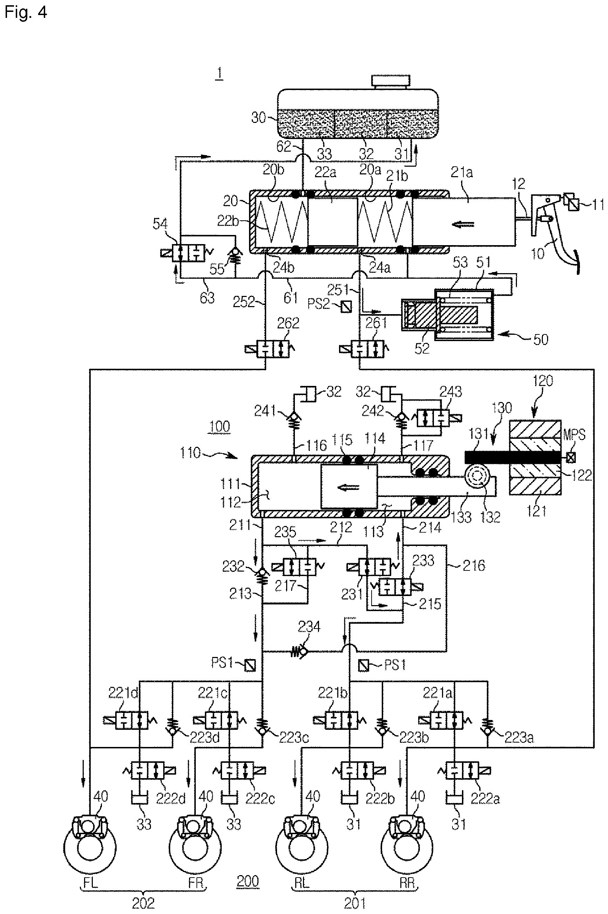

FIG. 3 is a hydraulic circuit diagram illustrating a situation in which a braking pressure is supplied in a low-pressure mode while a hydraulic piston moves forward. FIG. 4 is a hydraulic circuit diagram illustrating a situation in which a braking force is supplied in a high-pressure mode while the hydraulic piston moves forward.

When braking by the driver is started, a required braking amount of the driver may be detected based on information obtained by the pedal displacement sensor 11 such as pressure of the brake pedal 10 applied by the driver. The ECU (not shown) drives the motor 120 upon receiving an electrical signal output from the pedal displacement sensor 11.

Also, the ECU may receive a regenerative (remaining) braking amount from the backup flow path pressure sensor PS1 provided at an outlet side of the master cylinder 20 and the first or second hydraulic circuit pressure sensors PS1 and PS3 respectively provided at the first or second hydraulic circuits 201 and 202 and calculate a frictional braking amount according to a difference between the required braking amount of the driver and the regenerative braking amount to determine a pressure increase or pressure decrease of the wheel cylinders 40.

Referring to FIG. 3, when the driver pushes down the brake pedal 10 in the early stage of braking, the motor 120 rotates in one direction, a rotational force of the motor 120 is transmitted to the hydraulic pressure providing unit 110 by the power conversion unit 130, and a hydraulic pressure is generated in the first pressure chamber 112 by forward movement of the hydraulic piston 114 of the hydraulic pressure providing unit 110. The hydraulic pressure output from the hydraulic pressure providing unit 110 is transmitted to the wheel cylinders 40 respectively provided at four wheels through the first hydraulic circuit 201 and the second hydraulic circuit 202, thereby generating a braking force.

Particularly, the hydraulic pressure received from the first pressure chamber 112 is directly transmitted to the wheel cylinders 40 provided at two wheels RL and RR through the first hydraulic flow path 211 and the second hydraulic flow path 212 connected to the first communication hole 111a. In this case, the first and second inlet valves 221a and 221b respectively installed at two flow paths branched out from the second hydraulic flow path 212 are open. Also, the first and second outlet valves 222a and 222b respectively installed at two flow paths branched out from the second hydraulic flow path 212 are closed, thereby preventing leakage the hydraulic pressure into the reservoir 30.

In addition, the hydraulic pressure provided from the first pressure chamber 112 is directly transmitted to the wheel cylinders 40 provided at two wheels FL and FR through the first hydraulic flow path 211 and the third hydraulic flow path 213 connected to the first communication hole 111a. In this case, the third and fourth inlet valves 221c and 221d respectively installed at two flow paths branched out from the third hydraulic flow path 213 are provided in open states. In addition, the third and fourth outlet valves 222c and 222d respectively installed at two flow paths branched out from the third hydraulic flow path 213 are maintained in closed states, thereby preventing leakage of the hydraulic pressure into the reservoir 30. In this regard, the first valve 231 may be opened to open the second hydraulic flow path 212 from the first pressure chamber 112 to the first hydraulic circuit 201.

Meanwhile, in the low-pressure mode, the third valve 233 may be maintained in the closed state to block the fifth hydraulic flow path 215. Thus, since the hydraulic pressure generated in the first pressure chamber 112 cannot be transmitted to the second pressure chamber 113 through the fifth hydraulic flow path 215, the pressure increase rate per stroke may be increased. Therefore, a quick braking response may be expected in the beginning of braking.

In addition, when the pressure transmitted to the wheel cylinder 40 is measured to be higher than a target pressure in accordance with the pedal effort of the brake pedal 10, the ECU may control the hydraulic pressure to follow the target pressure by opening at least one of the first to fourth outlet valves 222.

Also, when the hydraulic pressure supply device 100 generates the hydraulic pressure, the first and second cut valves 261 and 262 respectively installed at the first and second backup flow paths 251 and 252 connected to the first and second hydraulic ports 24a and 24b of the master cylinder 20 are closed to prevent the hydraulic pressure output from the master cylinder 20 from being transmitted to the wheel cylinders 40.

In addition, the pressure generated by pressurizing the master cylinder 20 in response to the pedal effort of the brake pedal 10 is transmitted to the simulation device 50 connected to the master cylinder 20. In this regard, the simulator valve 54 that is disposed at the rear end of the simulation chamber 51 and normally closed is opened to transmit the pressurized medium stored in the simulation chamber 51 to the reservoir 30 via the simulator valve 54. Also, since the simulation piston 52 moves and a pressure corresponding to the load of the reaction force spring 53 supporting the simulation piston 52 is generated in the simulation chamber 51, the driver may receive an appropriate pedal feeling.

In addition, the hydraulic circuit pressure sensor PS1 installed at the third hydraulic flow path 213 may detect a flow rate of a fluid transmitted to the wheel cylinder 40 installed at the front left wheel FL or the front right wheel FR. Thus, the ECU may control the flow rate of the fluid transmitted to the wheel cylinder 40 by controlling the hydraulic pressure supply device 100 in accordance with the output of the hydraulic circuit pressure sensor PS1. Particularly, the flow rate and discharge speed of the fluid discharged out of the wheel cylinder 40 may be controlled by adjusting distance and speed of forward movement of the hydraulic piston 114.

Meanwhile, before the hydraulic piston 114 moves forward to a maximum position, the hydraulic pressure supply device 100 may convert the mode from the low-pressure mode as illustrated in FIG. 3 into the high-pressure mode as illustrated in FIG. 4.

Referring to FIG. 4, in the high-pressure mode, the third valve 233 is switched to the open state to open the fifth hydraulic flow path 215. Thus, a part of the hydraulic pressure generated in the first pressure chamber 112 may be transmitted to the second pressure chamber 113 through the second hydraulic flow path 212 and the fifth hydraulic flow path 215 to be used to push the hydraulic piston 114.

Since a part of the pressurized medium output from the first pressure chamber 112 flows into the second pressure chamber 113 in the high-pressure mode, the pressure increase rate per stroke may be reduced. However, since a portion of the hydraulic pressure generated in the first pressure chamber 112 is used to push the hydraulic piston 114, a maximum pressure is increased. In this case, the maximum pressure is increased because a volume per stroke of the hydraulic piston 114 of the second pressure chamber 113 is smaller than a volume per stroke of the hydraulic piston 114 of the first pressure chamber 112.

In this case, the third dump valve 243 may be converted into a closed state. Since the third dump valve 243 is closed, the pressurized medium stored in the first pressure chamber 112 may quickly flow into the second pressure chamber 113 having a negative pressure. However, in some cases, the third dump valve 243 may be maintained in an open state such that the pressurized medium stored in the second pressure chamber 113 may flow into the reservoir 30.

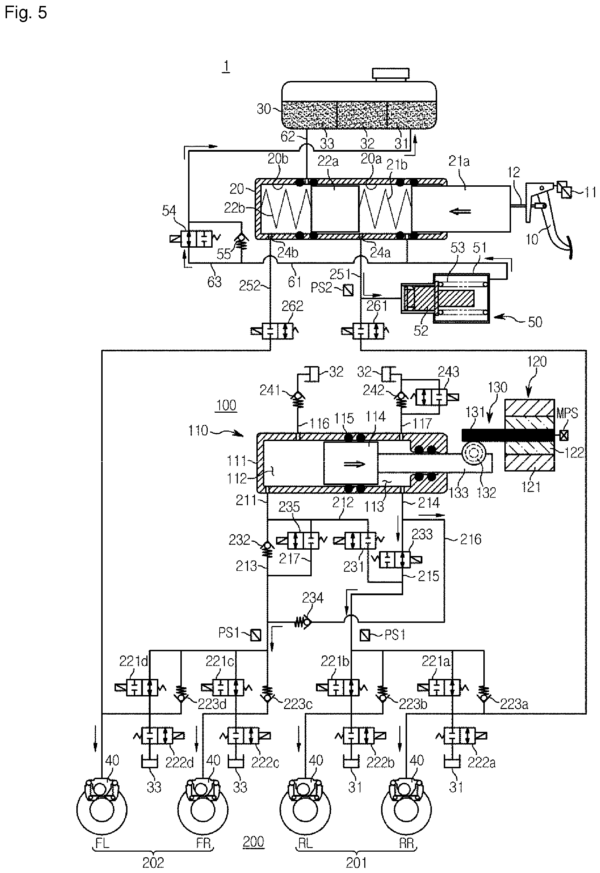

FIG. 5 is a hydraulic circuit diagram illustrating a situation in which a braking pressure is supplied while the hydraulic piston 114 moves backward.

Referring to FIG. 5, when the driver pushes down the brake pedal 10 in the early stage of braking, the motor 120 operates to rotate in the opposite direction, a rotational force of the motor 120 is transmitted to the hydraulic pressure providing unit 110 by the power conversion unit 130, and a hydraulic pressure is generated in the second pressure chamber 113 by backward movement of the hydraulic piston 114 of the hydraulic pressure providing unit 110. The hydraulic pressure output from the hydraulic pressure providing unit 110 is transmitted to the wheel cylinders 40 respectively provided at four wheels through the first hydraulic circuit 201 and the second hydraulic circuit 202, thereby generating a braking force.

Particularly, the hydraulic pressure received from the second pressure chamber 113 passes through the fourth hydraulic flow path 214 and the open fifth hydraulic flow path 215 to be transmitted to the wheel cylinders 40 of the first hydraulic circuit 201. In this case, the fifth valve 235 and the first valve 231 are maintained in open states, the first and second inlet valves 221a and 221b are opened, and the first and second outlet valves 222a and 222b are maintained in closed states to prevent leakage of the hydraulic pressure into the reservoir 30. Similarly, the hydraulic pressure received from the second pressure chamber 113 passes through the fourth hydraulic flow path 214 and the sixth hydraulic flow path 216 to be transmitted to the wheel cylinders 40 of the second hydraulic circuit 202. In this case, the third and fourth inlet valves 221c and 221d are opened, and the third and fourth outlet valves 222c and 222d are maintained in closed states to prevent leakage of the hydraulic pressure into the reservoir 30.

In other words, when the hydraulic piston 114 is pressed backward, the third valve 233 is switched from the closed state to the open state, thereby opening the fifth hydraulic flow path 215, and the sixth hydraulic flow path 216 is also opened since the fourth valve 234 is provided as a check valve allowing transmission of the hydraulic pressure from the second pressure chamber 113 to the wheel cylinders 40. Thus, the hydraulic pressure generated in the second pressure chamber 113 cannot be transmitted to the first pressure chamber 112 and improves the pressure increase rate per stroke. Therefore, a quick braking response may be expected in the beginning of braking.

In this case, the third dump valve 243 may be switched into the closed state. As the third dump valve 243 is closed, the pressurized medium stored in the second pressure chamber 113 may quickly be discharged through the fourth hydraulic flow path 214.

Next, a case of releasing the braking force in the braking state of the electric brake system 1 according to the present embodiment in the normal operation.

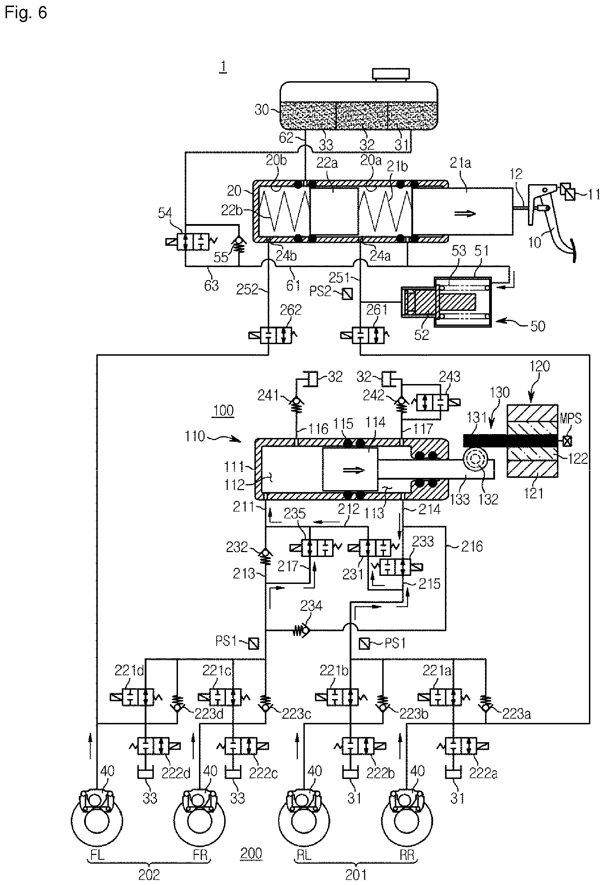

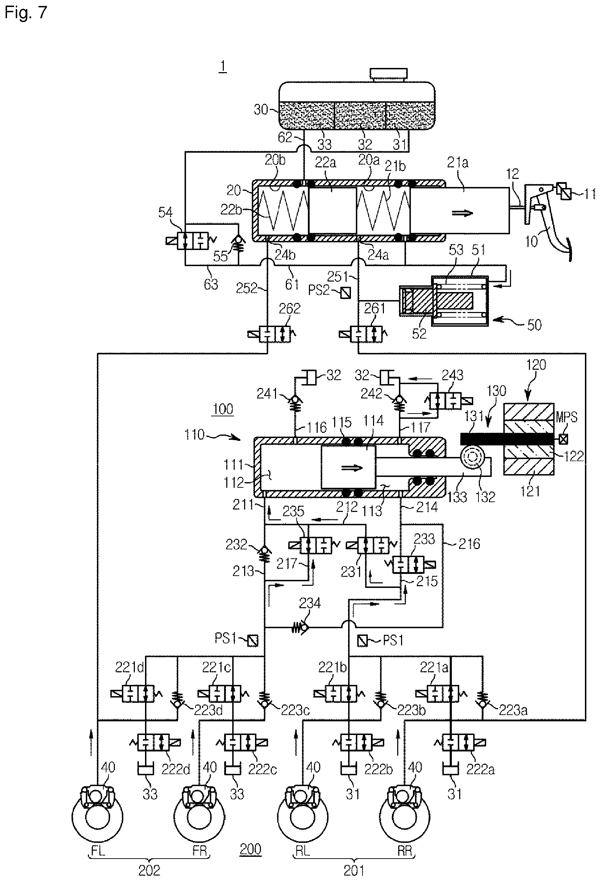

FIG. 6 is a hydraulic circuit diagram illustrating a situation in which a braking pressure is released in a high-pressure mode while the hydraulic piston 114 moves backward. FIG. 7 is a hydraulic circuit diagram illustrating a situation in which a braking pressure is released in a low-pressure mode while the hydraulic piston 114 moves backward.

Referring to FIG. 6, when the pedal effort applied to the brake pedal 10 is released, the motor 120 generates a rotational force in a direction opposite to that of braking and transmits the rotational force to the power conversion unit 130, and the worm shaft 131, the worm wheel 132, and the drive shaft 133 of the power conversion unit 130 rotate in the opposite direction to that of braking to move the hydraulic piston 114 backward to an original position thereof, thereby releasing the pressure from the first pressure chamber 112 or generating a negative pressure therein. In addition, the hydraulic pressure providing unit 110 receives the hydraulic pressure output from the wheel cylinders 40 through the first and second hydraulic circuits 201 and 202 and transmits the received hydraulic pressure to the first pressure chamber 112.

Particularly, the negative pressure generated in the first pressure chamber 112 releases the pressure of the wheel cylinders 40 by opening the second hydraulic flow path 212 and the first, third and fifth valves 231, 233, and 235.

Meanwhile, the hydraulic piston 114 needs to move backward to generate the negative pressure in the first pressure chamber 112. However, when the second pressure chamber 113 is filled with the pressurized medium, resistance is generated while the hydraulic piston 114 moves backward. In the high-pressure mode, the first pressure chamber 112 and the second pressure chamber 113 may communicate with each other by opening the first, third and fifth valves 231, 233, and 235, and the pressurized medium stored in the second pressure chamber 113 may flow into the first pressure chamber 112.

The third dump valve 243 may be switched to the closed state. By closing the third dump valve 243, the pressurized medium stored in the second pressure chamber 113 may be discharged only through the fourth hydraulic flow path 214. However, in some cases, the third dump valve 243 may be maintained in the open state, and thus the pressurized medium stored in the second pressure chamber 113 may flow into the reservoir 30.

In addition, when the negative pressure transmitted to the first and second hydraulic circuits 201 and 202 is measured to be higher than a target release pressure in accordance with a release amount of the brake pedal 10, the ECU may control the negative pressure to follow the target pressure by opening at least one of the first to fourth outlet valves 222.

Also, when the hydraulic pressure supply device 100 generates the hydraulic pressure, the first and second cut valves 261 and 262 respectively installed at the first and second backup flow paths 251 and 252 connected to the first and second hydraulic ports 24a and 24b of the master cylinder 20 are closed to prevent the negative pressure generated in the master cylinder 20 from being transmitted to the hydraulic control unit 200.

In the high-pressure mode as illustrated in FIG. 6, since the pressurized medium stored in the second pressure chamber 113 flows to the first pressure chamber 112 together with the pressurized medium stored in the wheel cylinders 40 by the negative pressure generated in the first pressure chamber 112 by backward movement of the hydraulic piston 114, a pressure reduction rate of the wheel cylinder 40 is low. Thus, in the high-pressure mode, it may be difficult to quickly release the pressure.

For this reason, the high-pressure mode may be used only in a high-pressure state. When the pressure decreases below a predetermined level, the mode may be switched to the low-pressure mode as illustrated in FIG. 7.

Referring to FIG. 7, in the low-pressure mode, the third dump valve 243 is switched to or maintained in the open state instead of closing the fifth hydraulic flow path 215 by closing the third valve 233 or maintaining the third valve 233 in the closed state, so that the second pressure chamber 113 may be connected to the reservoir 30.

In the low-pressure mode, since the negative pressure generated in the first pressure chamber 112 is used only to suck the pressurized medium stored in the wheel cylinders 40, the pressure reduction rate per stroke of the hydraulic piston 114 increases in comparison with the high-pressure mode. In this regard, most of the hydraulic pressure generated in the second pressure chamber 113 flows into the reservoir 30 at atmospheric pressure through the open third dump valve 243 instead of passing through the fourth valve 234 provided as a check valve.

Although not shown in the drawing, a release of the braking pressure of the wheel cylinders 40 in the low-pressure mode and the high-pressure mode when the hydraulic piston 114 moves in the opposite direction, i.e., moves forward, may also be easily controlled by generating a hydraulic pressure and a negative pressure in each of the first pressure chamber 112 and the second pressure chamber 113 by controlling the hydraulic flow paths 211, 212, 213, 214, 215, 216, and 217 and the valves 231, 232, 233, 234, 235, 141, 242, and 243 as described above.

Hereinafter, the operation of an inspection mode of the electric brake system 1 according to the present embodiment will be described.

The inspection mode may be used to detect leaking of the master cylinder 20 or the simulation device 50. The brake system 1 according to the present embodiment may inspect abnormality of devices by performing the inspection mode periodically or frequently before the driver starts running the vehicle and during stopping or driving.

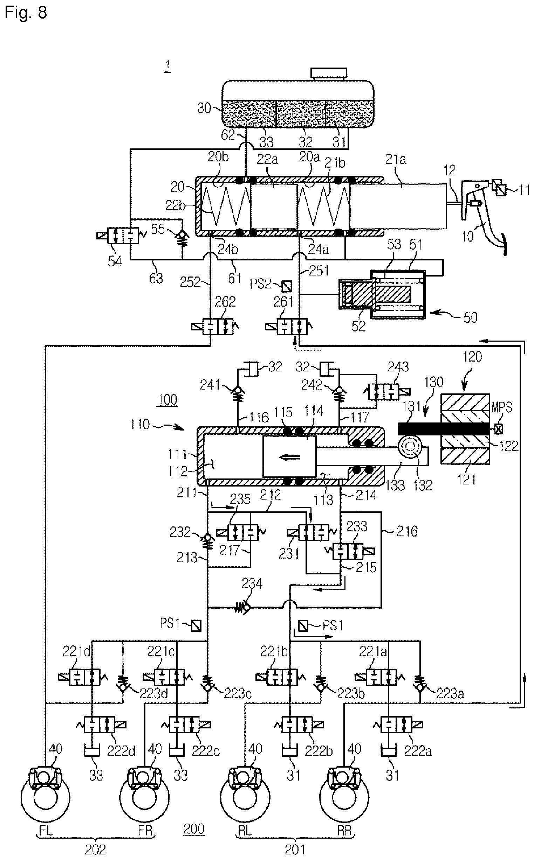

FIG. 8 is a hydraulic circuit diagram illustrating that the electric brake system 1 according to the present embodiment inspects whether the master cylinder 20 or the simulator valve 54 leaks.

In the inspection mode of the brake system 1, each valve is controlled in the early stage of braking that is an inoperative state, and the hydraulic pressure may be supplied only to the first backup flow path 251 connected to the simulation device 50 between the first and second backup flow paths 251 and 252. Thus, the second cut valve 262 may be switched to a closed state to prevent the hydraulic pressure discharged from the hydraulic pressure supply device 100 from being transmitted to the master cylinder 20 through the second backup flow path 252. Also, by switching the simulator valve 54 to a closed state, leakage of the hydraulic pressure transmitted from the hydraulic pressure supply device 100 to the master cylinder 20 into the reservoir 30 through the simulation device 50 and the first reservoir flow path 61 may be prevented.

In the inspection mode, the ECU may determine whether the master cylinder 20 or the simulation device 50 leaks by generating a hydraulic pressure using the hydraulic pressure supply device 100 and analyzing a pressure of the master cylinder 20 measured by the pressure sensor PS2. Leakage of the master cylinder 20 or existence of air may be diagnosed and leakage of the simulation device 50 may be diagnosed by comparing a hydraulic pressure of the pressurized medium predicted based on operation of the hydraulic pressure supply device 100 with an actual inner pressure of the first master chamber 20a measured by the pressure sensor PS2. Particularly, when the hydraulic pressure calculated and predicted based on the operation of the hydraulic pressure supply device 100 and the actual hydraulic pressure of the master cylinder 20 measured by the backup flow path pressure sensor PS1 are the same based on comparison results, it may be determined that the master cylinder 20 and the simulation device 50 do not leak and the master cylinder 20 does not include air. On the contrary, when the actual hydraulic pressure of the master cylinder 20 measured by the backup flow path pressure sensor PS1 is less than the hydraulic pressure calculated and predicted based on the operation of the hydraulic pressure supply device 100, a part of the hydraulic pressure of the pressurized medium supplied to the first master chamber 20a is lost, and thus it is determined that the master cylinder 20 or the simulator valve 54 leaks or the master cylinder 20 includes air and the driver may be informed of the result.

FIG. 8 exemplarily illustrates that the hydraulic pressure is generated in the first pressure chamber 112 by forward movement of the hydraulic piston 114 of the hydraulic pressure supply device 100 and the inspection mode is performed by opening the first valve 231. However, the embodiment is not limited thereto, and the hydraulic pressure may also be generated in the second pressure chamber 113 by backward movement of the hydraulic piston 114 and the inspection mode may be performed by opening the third valve 233.

Since the electric brake system 1 according to the present embodiment includes the first reservoir flow path 61 connecting the master cylinder 20, the simulation device 50, and the reservoir 30 and the simulator valve 54 provided therein, the simulator valve to control operation of the pedal simulator and the inspection valve to control the flow of the hydraulic pressure during the inspection mode may be integrated with each other. Thus, the electric brake system 1 may have a simple structure thereby improve productivity of products. Furthermore, by reducing the number of valves, manufacturing costs may be reduced and assembly processes may be simplified.

As is apparent from the above description, the electric brake system and the operating method thereof according to the present embodiment has an effect of implementing braking stably and efficiently under various operating situations of vehicles.

The electric brake system and the operating method thereof according to the present embodiment has an effect of improving driving stability.

The electric brake system and the operating method thereof according to the present embodiment has an effect of stably generating a high braking pressure.

The electric brake system and the operating method thereof according to the present embodiment has an effect of improving performance and working reliability of products.

The electric brake system and the operating method thereof according to the present embodiment has an effect of stably providing a braking pressure even when a component malfunctions or a pressurized medium leaks.

The electric brake system and the operating method thereof according to the present embodiment has an effect of reducing a size and weight of a product by simplifying a structure and decreasing the number of components.

The electric brake system and the operating method thereof according to the present embodiment has an effect of improving durability by reducing loads applied components.

Although a few embodiments of the present invention have been shown and described, it would be appreciated by those skilled in the art that changes may be made in these embodiments without departing from the principles of the invention, the scope of which is defined in the claims.

## Claims

1. An electric brake system (1) comprising:
a hydraulic pressure supply device (100) configured to generate a hydraulic pressure by operating a hydraulic piston (114) by an electrical signal output in response to displacement of a brake pedal (10) and comprising a first pressure chamber (112) formed at one side of the hydraulic piston (114) movably accommodated in a cylinder block (111) and a second pressure chamber (113) formed at the other side of the hydraulic piston (114); and
a hydraulic control unit (200) comprising a first hydraulic circuit (201) configured to control a hydraulic pressure transmitted to two wheel cylinders (40) and a second hydraulic circuit (202) configured to control a hydraulic pressure transmitted to the other two wheel cylinders (40),
wherein the hydraulic control unit (200) comprises a first hydraulic flow path (211) communicating with the first pressure chamber (112), second and third hydraulic flow paths (212, 213) branched out from the first hydraulic flow path (211) and respectively connected to the first and second hydraulic circuits (201, 202), a fourth hydraulic flow path (214) communicating with the second pressure chamber (113), fifth and sixth hydraulic flow paths (215, 2016) branched out from the fourth hydraulic flow path (214) and respectively connected to the first and second hydraulic circuits (201, 202), and a seventh hydraulic flow path (217) connecting the second hydraulic flow path (212) with the third hydraulic flow path (213),
**characterized in that**
the hydraulic control unit (200) comprises a first valve (231) provided at the second hydraulic flow path (212) between a point connected to the seventh hydraulic flow path (217) and the first hydraulic circuit (201) to control a flow of a pressurized medium, a second valve (232) provided at the third hydraulic flow path (213) between a point branched out into the second hydraulic flow path (212) and a point connected to the seventh hydraulic flow path (217) to control a flow of the pressurized medium, a third valve (233) provided at the fifth hydraulic flow path (215) to control a flow of the pressurized medium, a fourth valve (234) provided at the sixth hydraulic flow path (216) to control a flow of the pressurized medium, and a fifth valve (235) provided at the seventh hydraulic flow path (217) to control a flow of the pressurized medium.

2. The electric brake system (1) according to claim 1, wherein the first, third and fifth valves (231, 233, 235) are provided as solenoid valves configured to control bidirectional flows of the pressurized medium,
the second valve (232) is provided as a check valve allowing only a flow of the pressurized medium in a direction from the first pressure chamber (112) to the second hydraulic circuit, and
the fourth valve (234) is provided as a check valve allowing only a flow of the pressurized medium only in a direction from the second pressure chamber (113) to the second hydraulic circuit.

3. The electric brake system (1) according to one of claims 1 to 2, further comprising:
a reservoir (30) to store the pressurized medium;
a master cylinder (20) comprising a master chamber (20a) and a master piston (21a) provided to be displaced by the operation of the brake pedal (10) and configured to pressurize and discharge the pressurized medium stored in the master chamber (20a) according to displacement;
a simulation device (50) comprising a simulation chamber (51) and a simulation piston (52) provided to be displaced by the pressurized medium discharged from the master chamber (20a) and configured to pressurize and discharge the pressurized medium stored in the simulation chamber (51) according to displacement; and
a reservoir flow path (61) connecting the master chamber (20a), the simulation chamber (51), and the reservoir (30).

4. The electric brake system (1) according to claim 3, further comprising:
a simulator check valve (55) provided at the reservoir flow path (61) and allowing only a flow of the pressurized medium from the reservoir (30) to the master chamber and the simulation chamber (51); and
a simulator valve (54) provided at a bypass flow path (63) connected in parallel to the simulator check valve (55) in the reservoir flow path (61) to control bidirectional flows of the pressurized medium.

5. The electric brake system (1) according to claim 3 or 4, wherein the master piston comprises a first master piston (21a) directly pressurized by the brake pedal (10) and a second master piston (22a) indirectly pressurized by the first master piston (21a),
the master chamber comprises a first master chamber (20a) to accommodate the first master piston (21a) and a second master chamber (20b) to accommodate the second master piston (22a),
the simulation piston (52) is provided to be displaced by the pressurized medium pressurized and discharged from the first master chamber (20a), and
the reservoir flow path (61) connects the first master chamber (20a), the simulation chamber (51), and the reservoir (30).

6. The electric brake system (1) according to one of claims 3 to 5, wherein the simulation device (50) further comprises a reaction force spring (53) elastically supporting the simulation piston (52).

7. The electric brake system (1) according to one of claims 3 to 6, further comprising:
a first dump flow path (116) connecting the first pressure chamber (112) with the reservoir (30);
a second dump flow path (117) connecting the second pressure chamber (113) with the reservoir (30);
a first dump valve (241) provided at the first dump flow path (116) as a check valve to control the flow of the pressurized medium allowing only a flow of the pressurized medium in a direction from the reservoir (30) to the first pressure chamber (112);
a second dump valve (242) provided at the second dump flow path (117) as a check valve to control the flow of the pressurized medium allowing only a flow of the pressurized medium in a direction from the reservoir (30) to the second pressure chamber (113); and
a third dump valve (243) provided at a bypass flow path (63) connected in parallel to the second dump valve (242) in the second dump flow path (117) as a solenoid valve to control the flow of the pressurized medium allowing bidirectional flows of the pressurized medium between the reservoir (30) and the second pressure chamber (113).

8. The electric brake system (1) according to one of claims 5 to 7, further comprising:
a first backup flow path (251) connecting the first master chamber (20a) with the first hydraulic circuit (201);
a second backup flow path (252) connecting the second master chamber (20b) with the second hydraulic circuit (202);
a first cut valve (261) provided at the first backup flow path (251) to control the flow of the pressurized medium; and
a second cut valve (262) provided at the second backup flow path (252) to control the flow of the pressurized medium.

9. A method of operating the electric brake system (1) according to claim 2, wherein a normal operation mode is performed by sequentially performing a low-pressure mode in which a relatively low hydraulic pressure is supplied and a high-pressure mode in which a relatively high hydraulic pressure is supplied in accordance with a level of the hydraulic pressure transmitted from the hydraulic pressure supply device (100) to the wheel cylinders (40), wherein the low-pressure mode is performed by opening the first valve (231) and supplying a hydraulic pressure generated in the first pressure chamber (112) by forward movement of the hydraulic piston (114) to the first and second hydraulic circuits (201, 202).

10. The method according to claim 9, wherein the high-pressure mode is performed by opening the first valve (231) and supplying a part of a hydraulic pressure generated in the first pressure chamber (112) by forward movement of the hydraulic piston (114) after the low-pressure mode to the first and second hydraulic circuits (201, 202), and
by opening the third valve (233) and supplying another part of the hydraulic pressure generated in the first pressure chamber (112) to the second pressure chamber (113).

11. The method according to one of claims 9 to 10, wherein the low-pressure mode is released by opening the first and fifth valves (231, 235) and recovering the pressurized medium from the first and second hydraulic circuits (201, 202) to the first pressure chamber (112) by generating a negative pressure in the first pressure chamber (112) by backward movement of the hydraulic piston (114).

12. The method according to one of claims 9 to 11, wherein the high-pressure mode is released by opening the first and fifth valves (231, 235) and recovering the pressurized medium from the first and second hydraulic circuits (201, 202) to the first pressure chamber (112) by generating a negative pressure in the first pressure chamber (112) by backward movement of the hydraulic piston (114), and by opening the third valve (233) and supplying the pressurized medium to the first pressure chamber (112) from the second pressure chamber (113).

13. A method of operating the electric brake system (1) according to claim 8, wherein an abnormal operation mode is performed by opening the first cut valve (261) to allow the first master chamber (20a) and the first hydraulic circuit (201) to communicate with each other, and opening the second cut valve (262) to allow the second master chamber (20b) and the second hydraulic circuit (202) to communicate with each other.

14. A method of operating the electric brake system (1) according to claim 5, wherein a normal mode is performed by opening the simulator valve (54), displacing the pressurized medium discharged from the first master chamber (20a) using the simulation piston (52), and supplying the pressurized medium stored in the simulation chamber (51) to the reservoir (30) through the reservoir flow path (61).

15. A method of operating the electric brake system (1) according to claim 8, wherein an inspection mode to check whether the master cylinder or the simulator valve (54) leaks is performed by opening the first cut valve (261) while closing the simulator valve (54) and the second cut valve (262), supplying a hydraulic pressure generated by operating the hydraulic pressure supply device (100) to the first master chamber (20a), and comparing a hydraulic pressure of the pressurized medium predicted based on a degree of displacement of the hydraulic piston (114) with a hydraulic pressure of the pressurized medium supplied into the first master chamber (20a).

## Patentansprüche

1. Elektrisches Bremssystem (1), umfassend:
eine Hydraulikdruckzuführvorrichtung (100), dazu ausgelegt, einen Hydraulikdruck durch Betätigen eines Hydraulikkolbens (114) durch ein in Reaktion auf eine Positionsveränderung eines Bremspedals (10) ausgegebenen elektrischen Signals zu erzeugen, und umfassend eine erste Druckkammer (112), ausgebildet an einer Seite des Hydraulikkolbens (114), der bewegbar in einem Zylinderblock (111) untergebracht ist, und eine zweite Druckkammer (113), ausgebildet an der anderen Seite des Hydraulikkolbens (114); und
eine Hydraulikregeleinheit (200), umfassend einen ersten Hydraulikkreis (201), dazu ausgelegt, einen auf zwei Radzylinder (40) übertragenen Hydraulikdruck zu regeln, und einen zweiten Hydraulikkreis (202), dazu ausgelegt, einen auf die anderen zwei Radzylinder (40) übertragenen Hydraulikdruck zu regeln,
wobei die Hydraulikregeleinheit (200) umfasst: einen ersten Hydraulikströmungspfad (211), der mit der ersten Druckkammer (112) in Verbindung steht, einen zweiten und dritten Hydraulikströmungspfad (212, 213), die vom ersten Hydraulikströmungspfad (211) nach außen abzweigen und mit dem ersten beziehungsweise zweiten Hydraulikkreis (201, 202) verbunden sind, einen vierten Hydraulikströmungspfad (214), der mit der zweiten Druckkammer (113) in Verbindung steht, einen fünften und sechsten Hydraulikströmungspfad (215, 216), die vom vierten Hydraulikströmungspfad (214) nach außen abzweigen und mit dem ersten beziehungsweise zweiten Hydraulikkreis (201, 202) verbunden sind, und einen siebenten Hydraulikströmungspfad (217), der den zweiten Hydraulikströmungspfad (212) mit dem dritten Hydraulikströmungspfad (213) verbindet,
**dadurch gekennzeichnet, dass** die Hydraulikregeleinheit (200) umfasst: ein erstes Ventil (231), bereitgestellt am zweiten Hydraulikströmungspfad (212) zwischen einem Punkt, der mit dem siebenten Hydraulikströmungspfad (217) verbunden ist, und dem ersten Hydraulikkreis (201), um einen Strom eines druckbeaufschlagten Mediums zu regeln, ein zweites Ventil (232), bereitgestellt am dritten Hydraulikströmungspfad (213) zwischen einem Punkt, der nach außen in den zweiten Hydraulikströmungspfad (212) abzweigt, und einem Punkt, der mit dem siebenten Hydraulikströmungspfad (217) verbunden ist, um einen Strom des druckbeaufschlagten Mediums zu regeln, ein drittes Ventil (233), bereitgestellt am fünften Hydraulikströmungspfad (215), um einen Strom des druckbeaufschlagten Mediums zu regeln, ein viertes Ventil (234), bereitgestellt am sechsten Hydraulikströmungspfad (216), um einen Strom des druckbeaufschlagten Mediums zu regeln, und ein fünftes Ventil (235), bereitgestellt am siebenten Hydraulikströmungspfad (217), um einen Strom des druckbeaufschlagten Mediums zu regeln.

2. Elektrisches Bremssystem (1) nach Anspruch 1, wobei das erste, dritte und fünfte Ventil (231, 233, 235) als Magnetventile bereitgestellt sind, dazu ausgelegt, bidirektionale Ströme des druckbeaufschlagten Mediums zu regeln,
das zweite Ventil (232) als ein Rückschlagventil bereitgestellt ist, das nur einen Strom des druckbeaufschlagten Mediums in einer Richtung von der ersten Druckkammer (112) zum zweiten Hydraulickreis ermöglicht, und
das vierte Ventil (234) als ein Rückschlagventil bereitgestellt ist, das nur einen Strom des druckbeaufschlagten Mediums in nur einer Richtung von der zweiten Druckkammer (113) zum zweiten Hydraulickreis ermöglicht.

3. Elektrisches Bremssystem (1) nach einem der Ansprüche 1 bis 2, ferner umfassend:
einen Behälter (30) zum Speichern des druckbeaufschlagten Mediums;
einen Hauptzylinder (20), umfassend eine Hauptkammer (20a) und einen Hauptkolben (21a), bereitgestellt, um durch die Betätigung des Bremspedals (10) in seiner Position verändert zu werden, und dazu ausgelegt, das in der Hauptkammer (20a) gespeicherte druckbeaufschlagte Medium gemäß der Positionsveränderung mit Druck zu beaufschlagen und abzulassen;
eine Simulationsvorrichtung (50), umfassend eine Simulationskammer (51) und einen Simulationskolben (52), bereitgestellt, um durch das aus der Hauptkammer (20a) abgelassene druckbeaufschlagte Medium in seiner Position verändert zu werden und dazu ausgelegt, das in der Simulationskammer (51) gespeicherte druckbeaufschlagte Medium gemäß der Positionsveränderung mit Druck zu beaufschlagen und abzulassen; und
einen Behälterströmungspfad (61), der die Hauptkammer (20a), die Simulationskammer (51) und den Behälter (30) verbindet.

4. Elektrisches Bremssystem (1) nach Anspruch 3, ferner umfassend:
ein Simulatorrückschlagventil (55), bereitgestellt am Behälterströmungspfad (61) und nur einen Strom des druckbeaufschlagten Mediums vom Behälter (30) zur Hauptkammer und zur Simulationskammer (51) ermöglichend; und
ein Simulatorventil (54), bereitgestellt an einem Umgehungsströmungspfad (63), parallel verbunden mit dem Simulatorrückschlagventil (55) im Behälterströmungspfad (61), um bidirektionale Ströme des druckbeaufschlagten Mediums zu regeln.

5. Elektrisches Bremssystem (1) nach Anspruch 3 oder 4, wobei der Hauptkolben einen ersten Hauptkolben (21a), der durch das Bremspedal (10) direkt mit Druck beaufschlagt wird, und einen zweiten Hauptkolben (22a), der durch den ersten Hauptkolben (21a) indirekt mit Druck beaufschlagt wird, umfasst,
die Hauptkammer eine erste Hauptkammer (20a) zur Aufnahme des ersten Hauptkolbens (21a) und eine zweite Hauptkammer (20b) zur Aufnahme des zweiten Hauptkolbens (22a) umfasst,
der Simulationskolben (52) bereitgestellt ist, um durch das druckbeaufschlagte Medium, das von der ersten Hauptkammer (20a) mit Druck beaufschlagt und abgelassen wird, in seiner Position verändert zu werden, und
der Behälterströmungspfad (61) die erste Hauptkammer (20a), die Simulationskammer (51) und den Behälter (30) verbindet.

6. Elektrisches Bremssystem (1) nach einem der Ansprüche 3 bis 5, wobei die Simulationsvorrichtung (50) ferner eine Reaktionskraftfeder (53) umfasst, die den Simulationskolben (52) elastisch stützt.

7. Elektrisches Bremssystem (1) nach einem der Ansprüche 3 bis 6, ferner umfassend:
einen ersten Ablassströmungspfad (116), der die erste Drucckammer (112) mit dem Behälter (30) verbindet;
einen zweiten Ablassströmungspfad (117), der die zweite Druckkammer (113) mit dem Behälter (30) verbindet;
ein erstes Ablassventil (241), bereitgestellt am ersten Ablassströmungspfad (116) als ein Rückschlagventil zur Regelung des Stroms des druckbeaufschlagten Mediums, das nur einen Strom des druckbeaufschlagten Mediums in einer Richtung vom Behälter (30) zur ersten Druckkammer (112) ermöglicht;
ein zweites Ablassventil (242), bereitgestellt am zweiten Ablassströmungspfad (117) als ein Rückschlagventil zur Regelung des Stroms des druckbeaufschlagten Mediums, das nur einen Strom des druckbeaufschlagten Mediums in einer Richtung vom Behälter (30) zur zweiten Druckkammer (113) ermöglicht; und
ein drittes Ablassventil (243), bereitgestellt an einem Umgehungsströmungspfad (63), parallel verbunden mit dem zweiten Ablassventil (242) im zweiten Ablassströmungspfad (117) als ein Magnetventil zur Regelung des Stroms des druckbeaufschlagten Mediums, das bidirektionale Ströme des druckbeaufschlagten Mediums zwischen dem Behälter (30) und der zweiten Druckkammer (113) ermöglicht.

8. Elektrisches Bremssystem (1) nach einem der Ansprüche 5 bis 7, ferner umfassend:
einen ersten Reserveströmungspfad (251), der die erste Hauptkammer (20a) mit dem ersten Hydraulikkreis (201) verbindet;
einen zweiten Reserveströmungspfad (252), der die zweite Hauptkammer (20b) mit dem zweiten Hydraulikkreis (202) verbindet;
ein erstes Trennventil (261), bereitgestellt an dem ersten Reserveströmungspfad (251), zur Regelung des Stroms des druckbeaufschlagten Mediums; und
ein zweites Trennventil (262), bereitgestellt an dem zweiten Reserveströmungspfad (252), zur Regelung des Stroms des druckbeaufschlagten Mediums.

9. Verfahren zum Betreiben des elektrischen Bremssystems (1) nach Anspruch 2, wobei ein normaler Betriebsmodus ausgeführt wird durch sequenzielles Ausführen eines Niederdruckmodus, in dem ein relativ niedriger Hydraulikdruck zugeführt wird, und eines Hochdruckmodus, in dem ein relativ hoher Hydraulikdruck zugeführt wird, entsprechend einem Niveau des von der Hydraulikdruckzuführvorrichtung (100) auf die Radzylinder (40) übertragenen Hydraulikdrucks, wobei der Niederdruckmodus ausgeführt wird durch Öffnen des ersten Ventils (231) und Zuführen eines in der ersten Druckkammer (112) durch Vorwärtsbewegung des Hydraulikkolbens (114) erzeugten Hydraulikdrucks zum ersten und zweiten Hydraulikkreis (201, 202).

10. Verfahren nach Anspruch 9, wobei der Hochdruckmodus ausgeführt wird durch Öffnen des ersten Ventils (231) und Zuführen eines Teils eines in der ersten Druckkammer (112) durch Vorwärtsbewegung des Hydraulikkolbens (114) nach dem Niederdruckmodus erzeugten Hydraulikdrucks zum ersten und zweiten Hydraulikkreis (201, 202), und
durch Öffnen des dritten Ventils (233) und Zuführen eines weiteren Teils des in der ersten Druckkammer (112) erzeugten Hydraulikdrucks zur zweiten Druckkammer (113).

11. Verfahren nach einem der Ansprüche 9 bis 10, wobei der Niederdruckmodus freigegeben wird durch Öffnen des ersten und fünften Ventils (231, 235) und Zurückführen des druckbeaufschlagten Mediums aus dem ersten und zweiten Hydraulikkreis (201, 202) zur ersten Drucckammer (112) durch Erzeugen eines negativen Drucks in der ersten Druckkammer (112) durch Rückwärtsbewegung des Hydraulikkolbens (114).

12. Verfahren nach einem der Ansprüche 9 bis 11, wobei der Hochdruckmodus freigegeben wird durch Öffnen des ersten und fünften Ventils (231, 235) und Zurückführen des druckbeaufschlagten Mediums aus dem ersten und zweiten Hydraulikkreis (201, 202) zur ersten Drucckammer (112) durch Erzeugen eines negativen Drucks in der ersten Druckkammer (112) durch Rückwärtsbewegung des Hydraulikkolbens (114), und durch Öffnen des dritten Ventils (233) und Zuführen des druckbeaufschlagten Mediums aus der zweiten Druckkammer (113) in die erste Druckkammer (112).

13. Verfahren zum Betreiben des elektrischen Bremssystems (1) nach Anspruch 8, wobei ein unnormaler Betriebsmodus ausgeführt wird durch Öffnen des ersten Trennventils (261), um der ersten Hauptkammer (20a) und dem ersten Hydraulikkreis (201) zu ermöglichen, miteinander in Verbindung zu stehen, und Öffnen des zweiten Trennventils (262), um der zweiten Hauptkammer (20b) und dem zweiten Hauptkreis (202) zu ermöglichen, miteinander in Verbindung zu stehen.

14. Verfahren zum Betreiben des elektrischen Bremssystems (1) nach Anspruch 5, wobei ein normaler Modus ausgeführt wird durch Öffnen des Simulatorventils (54), Verlagern des aus der ersten Hauptkammer (20a) abgelassenen druckbeaufschlagten Mediums unter Verwendung des Simulationskolbens (52), und Zuführen des in der Simulationskammer (51) gespeicherten druckbeaufschlagten Mediums durch den Behälterströmungspfad (61) zu dem Behälter (30).

15. Verfahren zum Betreiben des elektrischen Bremssystems (1) nach Anspruch 8, wobei ein Inspektionsmodus, um zu prüfen, ob der Hauptzylinder oder das Simulatorventil (54) eine Undichtigkeit aufweist, ausgeführt wird durch Öffnen des ersten Trennventils (261), während das Simulatorventil (54) und das zweite Trennventil (262) geschlossen werden, Zuführen eines durch Betreiben der Hydraulikdruckzuführvorrichtung (100) erzeugten Hydraulikdrucks zur ersten Hauptkammer (20a) und Vergleichen eines auf Grundlage eines Grades von Positionsveränderung des Hydraulikkolbens (114) prognostizierten Hydraulikdrucks des druckbeaufschlagten Mediums mit einem Hydraulikdruck des in die erste Hauptkammer (20a) zugeführten druckbeaufschlagten Mediums.

## Revendications

1. Système de frein électrique (1) comprenant :
un dispositif d'alimentation en pression hydraulique (100) qui est configuré pour générer une pression hydraulique en actionnant un piston hydraulique (114) au moyen d'un signal électrique qui est émis en sortie en réponse au déplacement d'une pédale de frein (10) et qui comprend une première chambre de pression (112) qui est formée au niveau d'un côté du piston hydraulique (114) qui est logé de façon mobile dans un bloc cylindre (111) et une seconde chambre de pression (113) qui est formée au niveau de l'autre côté du piston hydraulique (114) ; et
une unité de commande hydraulique (200) qui comprend un premier circuit hydraulique (201) qui est configuré pour commander une pression hydraulique qui est transmise à deux cylindres de roue (40) et un second circuit hydraulique (202) qui est configuré pour commander une pression hydraulique qui est transmise à deux autres cylindres de roue (40) ;
dans lequel l'unité de commande hydraulique (200) comprend une première voie d'écoulement hydraulique (211) qui communique avec la première chambre de pression (112), des deuxième et troisième voies d'écoulement hydraulique (212, 213) qui sont dérivées à partir de la première voie d'écoulement hydraulique (211) et qui sont respectivement connectées aux premier et second circuits hydrauliques (201, 202), une quatrième voie d'écoulement hydraulique (214) qui communique avec la seconde chambre de pression (113), des cinquième et sixième voies d'écoulement hydraulique (215, 216) qui sont dérivées à partir de la quatrième voie d'écoulement hydraulique (214) et qui sont respectivement connectées aux premier et second circuits hydrauliques (201, 202) et une septième voie d'écoulement hydraulique (217) qui connecte la deuxième voie d'écoulement hydraulique (212) avec la troisième voie d'écoulement hydraulique (213) ;
**caractérisé en ce que** : l'unité de commande hydraulique (200) comprend une première soupape (231) qui est prévue au niveau de la deuxième voie d'écoulement hydraulique (212) entre un point qui est connecté à la septième voie d'écoulement hydraulique (217) et le premier circuit hydraulique (201) pour commander un écoulement d'un milieu sous pression, une deuxième soupape (232) qui est prévue au niveau de la troisième voie d'écoulement hydraulique (213) entre un point qui est dérivé à l'intérieur de la deuxième voie d'écoulement hydraulique (212) et un point qui est connecté à la septième voie d'écoulement hydraulique (217) pour commander un écoulement du milieu sous pression, une troisième soupape (233) qui est prévue au niveau de la cinquième voie d'écoulement hydraulique (215) pour commander un écoulement du milieu sous pression, une quatrième soupape (234) qui est prévue au niveau de la sixième voie d'écoulement hydraulique (216) pour commander un écoulement du milieu sous pression et une cinquième soupape (235) qui est prévue au niveau de la septième voie d'écoulement hydraulique (217) pour commander un écoulement du milieu sous pression.

2. Système de frein électrique (1) selon la revendication 1, dans lequel : les première, troisième et cinquième soupapes (231, 233, 235) sont prévues en tant que soupapes électromagnétiques qui sont configurées pour commander des écoulements bidirectionnels du milieu sous pression ;
la deuxième soupape (232) est prévue en tant que soupape antiretour qui permet seulement un écoulement du milieu sous pression dans une direction depuis la première chambre de pression (112) jusqu'au second circuit hydraulique ; et
la quatrième soupape (234) est prévue en tant que soupape antiretour qui permet seulement un écoulement du milieu sous pression seulement dans une direction depuis la seconde chambre de pression (113) jusqu'au second circuit hydraulique.

3. Système de frein électrique (1) selon l'une quelconque des revendications 1 et 2, comprenant en outre :
un réservoir (30) pour stocker le milieu sous pression ;
un cylindre maître (20) qui comprend une chambre de maître (20a) et un piston de maître (21a) qui est prévu pour être déplacé par l'actionnement de la pédale de frein (10) et qui est configuré pour mettre sous pression et pour décharger le milieu sous pression qui est stocké dans la chambre de maître (20a) en fonction du déplacement ;
un dispositif de simulation (50) qui comprend une chambre de simulation (51) et un piston de simulation (52) qui est prévu pour être déplacé par le milieu sous pression qui est déchargé depuis la chambre de maître (20a) et qui est configuré pour mettre sous pression et pour décharger le milieu sous pression qui est stocké dans la chambre de simulation (51) en fonction du déplacement ; et
une voie d'écoulement de réservoir (61) qui connecte la chambre de maître (20a), la chambre de simulation (51) et le réservoir (30).

4. Système de frein électrique (1) selon la revendication 3, comprenant en outre :
une soupape antiretour de simulateur (55) qui est prévue au niveau de la voie d'écoulement de réservoir (61) et qui permet seulement un écoulement du milieu sous pression depuis le réservoir (30) jusqu'à la chambre de maître et jusqu'à la chambre de simulation (51) ; et
une soupape de simulateur (54) qui est prévue au niveau d'une voie d'écoulement de dérivation (63) qui est connectée en parallèle à la soupape antiretour de simulateur (55) dans la voie d'écoulement de réservoir (61) pour commander des écoulements bidirectionnels du milieu sous pression.

5. Système de frein électrique (1) selon la revendication 3 ou 4, dans lequel : le piston de maître comprend un premier piston de maître (21a) qui est mis sous pression de façon directe par la pédale de frein (10) et un second piston de maître (22a) qui est mis sous pression de façon indirecte par le premier piston de maître (21a) ;
la chambre de maître comprend une première chambre de maître (20a) pour loger le premier piston de maître (21a) et une seconde chambre de maître (20b) pour loger le second piston de maître (22a) ;
le piston de simulation (52) est prévu pour être déplacé par le milieu sous pression qui est mis sous pression et qui est déchargé depuis la première chambre de maître (20a) ; et
la voie d'écoulement de réservoir (61) connecte la première chambre de maître (20a), la chambre de simulation (51) et le réservoir (30).

6. Système de frein électrique (1) selon l'une quelconque des revendications 3 à 5, dans lequel le dispositif de simulation (50) comprend en outre un ressort à force de réaction (53) qui supporte élastiquement le piston de simulation (52).

7. Système de frein électrique (1) selon l'une quelconque des revendications 3 à 6, comprenant en outre :
une première voie d'écoulement de décharge (116) qui connecte la première chambre de pression (112) avec le réservoir (30) ;
une seconde voie d'écoulement de décharge (117) qui connecte la seconde chambre de pression (113) avec le réservoir (30) ;
une première soupape de décharge (241) qui est prévue au niveau de la première voie d'écoulement de décharge (116) en tant que soupape antiretour pour commander l'écoulement du milieu sous pression en permettant seulement un écoulement du milieu sous pression dans une direction depuis le réservoir (30) jusqu'à la première chambre de pression (112) ;
une deuxième soupape de décharge (242) qui est prévue au niveau de la seconde voie d'écoulement de décharge (117) en tant que soupape antiretour pour commander l'écoulement du milieu sous pression en permettant seulement un écoulement du milieu sous pression dans une direction depuis le réservoir (30) jusqu'à la seconde chambre de pression (113) ; et
une troisième soupape de décharge (243) qui est prévue au niveau d'une voie d'écoulement de dérivation (63) qui est connectée en parallèle à la deuxième soupape de décharge (242) dans la seconde voie d'écoulement de décharge (117) en tant que soupape électromagnétique pour commander l'écoulement du milieu sous pression en permettant des écoulements bidirectionnels du milieu sous pression entre le réservoir (30) et la seconde chambre de pression (113).

8. Système de frein électrique (1) selon l'une quelconque des revendications 5 à 7, comprenant en outre :
une première voie d'écoulement de secours (251) qui connecte la première chambre de maître (20a) avec le premier circuit hydraulique (201) ;
une seconde voie d'écoulement de secours (252) qui connecte la seconde chambre de maître (20b) avec le second circuit hydraulique (202) ;
une première soupape de coupure (261) qui est prévue au niveau de la première voie d'écoulement de secours (251) pour commander l'écoulement du milieu sous pression ; et
une seconde soupape de coupure (262) qui est prévue au niveau de la seconde voie d'écoulement de secours (252) pour commander l'écoulement du milieu sous pression.

9. Procédé de fonctionnement du système de frein électrique (1) selon la revendication 2, dans lequel un mode de fonctionnement normal est réalisé en réalisant de façon séquentielle un mode à pression faible dans lequel une pression hydraulique relativement faible est alimentée et un mode à pression élevée dans lequel une pression hydraulique relativement élevée est alimentée en fonction d'un niveau de la pression hydraulique qui est transmise depuis le dispositif d'alimentation en pression hydraulique (100) sur les cylindres de roue (40), dans lequel le mode à pression faible est réalisé en ouvrant la première soupape (231) et en alimentant une pression hydraulique qui est générée dans la première chambre de pression (112) au moyen d'un déplacement vers l'avant du piston hydraulique (114) sur les premier et second circuits hydrauliques (201, 202).

10. Procédé selon la revendication 9, dans lequel le mode à pression élevée est réalisé : en ouvrant la première soupape (231) et en alimentant une partie d'une pression hydraulique qui est générée dans la première chambre de pression (112) au moyen d'un déplacement vers l'avant du piston hydraulique (114) après le mode à pression faible sur les premier et second circuits hydrauliques (201, 202) ; et
en ouvrant la troisième soupape (233) et en alimentant une autre partie de la pression hydraulique qui est générée dans la première chambre de pression (112) sur la seconde chambre de pression (113).

11. Procédé selon l'une quelconque des revendications 9 et 10, dans lequel le mode à pression faible est libéré en ouvrant les première et cinquième soupapes (231, 235) et en récupérant le milieu sous pression en provenance des premier et second circuits hydrauliques (201, 202) sur la première chambre de pression (112) en générant une pression négative dans la première chambre de pression (112) au moyen d'un déplacement vers l'arrière du piston hydraulique (114).

12. Procédé selon l'une quelconque des revendications 9 à 11, dans lequel le mode à pression élevée est libéré en ouvrant les première et cinquième soupapes (231, 235) et en récupérant le milieu sous pression en provenance des premier et second circuits hydrauliques (201, 202) sur la première chambre de pression (112) en générant une pression négative dans la première chambre de pression (112) au moyen d'un déplacement vers l'arrière du piston hydraulique (114) et en ouvrant la troisième soupape (233) et en alimentant le milieu sous pression sur la première chambre de pression (112) depuis la seconde chambre de pression (113).

13. Procédé de fonctionnement du système de frein électrique (1) selon la revendication 8, dans lequel un mode de fonctionnement anormal est réalisé en ouvrant la première soupape de coupure (261) pour permettre que la première chambre de maître (20a) et le premier circuit hydraulique (201) communiquent l'un avec l'autre et en ouvrant la seconde soupape de coupure (262) pour permettre que la seconde chambre de maître (20b) et le second circuit hydraulique (202) communiquent l'un avec l'autre.

14. Procédé de fonctionnement du système de frein électrique (1) selon la revendication 5, dans lequel un mode de fonctionnement normal est réalisé en ouvrant la soupape de simulateur (54), en déplaçant le milieu sous pression qui est déchargé depuis la première chambre de maître (20a) en utilisant le piston de simulation (52) et en alimentant le milieu sous pression qui est stocké dans la chambre de simulation (51) sur le réservoir (30) au travers de la voie d'écoulement de réservoir (61).

15. Procédé de fonctionnement du système de frein électrique (1) selon la revendication 8, dans lequel un mode d'inspection pour vérifier si le cylindre de maître ou la soupape de simulateur (54) fuit est réalisé en ouvrant la première soupape de coupure (261) tout en fermant la soupape de simulateur (54) et la seconde soupape de coupure (262), en alimentant une pression hydraulique qui est générée en actionnant le dispositif d'alimentation en pression hydraulique (100) sur la première chambre de maître (20a) et en comparant une pression hydraulique du milieu sous pression qui est prédite sur la base d'un degré de déplacement du piston hydraulique (114) avec une pression hydraulique du milieu sous pression qui est alimenté à l'intérieur de la première chambre de maître (20a).
